(19) Europäisches Patentamt
European Patent Office
Office européen des brevets

(11) **EP 1 916 650 A1**

(12) **EUROPEAN PATENT APPLICATION**
published in accordance with Art. 153(4) EPC

(43) Date of publication:
**30.04.2008 Bulletin 2008/18**

(51) Int Cl.:
*G09G 5/26* *(2006.01)*      *G09G 5/24* *(2006.01)*

(21) Application number: **06782058.9**

(22) Date of filing: **31.07.2006**

(86) International application number:
**PCT/JP2006/315180**

(87) International publication number:
**WO 2007/015471 (08.02.2007 Gazette 2007/06)**

(84) Designated Contracting States:
**DE FR GB**

(30) Priority: **02.08.2005 JP 2005223890**

(71) Applicant: **Sharp Kabushiki Kaisha**
**Osaka-shi, Osaka 545-8522 (JP)**

(72) Inventors:
• **OKADA, Satoshi**
**Kyoto 619-0216 (JP)**
• **NISHIDA, Osamu**
**Taki-gun,Mie 515-0331 (JP)**

• **KOTANI, Akio**
**Osaka-shi, Osaka 546-0033 (JP)**
• **ASAI, Yoshimi**
**Osaka-shi,Osaka 545-0034 (JP)**
• **NAKAMURA, Yasuhisa**
**Otokunigun,Kyoto 618-0091 (JP)**

(74) Representative: **Müller - Hoffmann & Partner**
**Patentanwälte,**
**Innere Wiener Strasse 17**
**81667 München (DE)**

(54) **CHARACTER DATA GENERATION DEVICE, ELECTRONIC INFORMATION DEVICE, CHARACTER DATA GENERATION PROGRAM, AND READABLE RECORDING MEDIUM**

(57)    The present invention prevents the deterioration in readability due to a conspicuous ruined character of a small dot size when vector-font data is expanded to bitmap data. Based on the character data generating program (41) and the data (42) thereof, it is possible to detect the ruining of components by comparing each of the components with its minimum shape when a character is enlarged/reduced, with the use of the minimum-shape DB (423) in which a minimum shape is defined for each of the components of a character or information for deriving the minimum shape is stored. In addition, by separately applying an enlargement/reduction ratio to each of the components by the ratio adjusting section (202) in order to at least maintain the size of the minimum shape and by overlapping the components in a predetermined order of priority by the component overlapping section (203), it is possible to generate character data while maintaining the balance of the components in size and avoiding the ruining of each of the components.

FIG.2

EP 1 916 650 A1

**Description**

TECHNICAL FIELD

The present invention relates to : a character data generating apparatus capable of suppressing the deterioration in readability and legibility due to a conspicuous ruined character of a small dot size when character data is enlarged/reduced to a specified size; a character display device (display apparatus) (e.g., liquid crystal display, organic EL (electro luminescent) display and the like) for generating character data using the character data generating apparatus; electronic information devices, such as communication apparatuses capable of communicating each other via a communication network, a printing device (printing apparatus) (e.g., printer), a cellular phone apparatus and a personal computer; a character data generating program for causing a computer to execute a character data generating process used in such electronic information devices; and a computer-readable recording medium having the character data generating program recorded thereon.

BACKGROUND ART

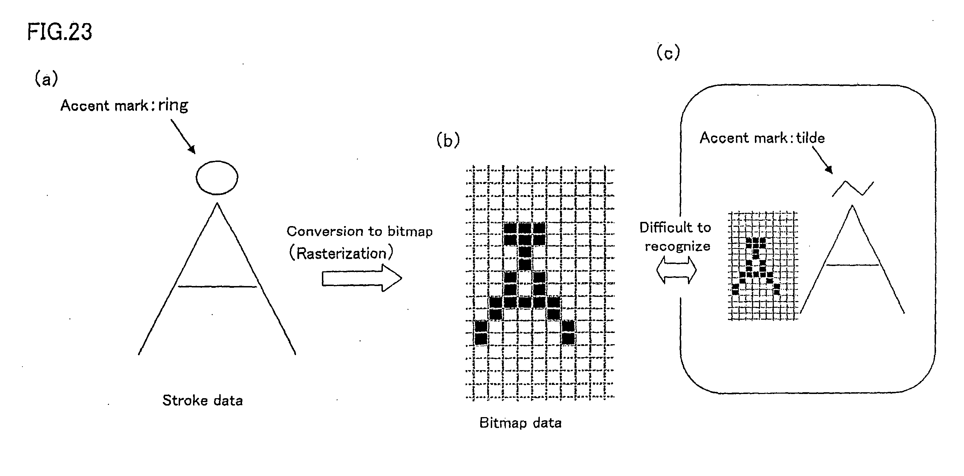

When bitmap data having a specified size is generated by enlarging/reducing vector-font data of a character having a plurality of components, a problem of ruining the character sometimes occurs since each of the plurality of components becomes too small, for example, in a relatively small character size of about 12 dots × 12 dots. This problem will be described with reference to Figure **23**.

Portions **(a)** of Figure **23** to (c) of Figure 23 show an example in which ring [o] above "A" in angstrom (unit sign) of a size of 12 dots × 12 dots is ruined due to a size-reducing process of the character in a conventional character data generating apparatus.

Portion **(a)** of Figure 23 shows stroke data of a character having accent mark, ring [o], above alphabet "A" . This stroke data is data that includes coordinates of lines for representing a skeleton shape of the character. When this stroke data is converted to bitmap data of a size of 12 dots × 12 dots, accent mark, ring [o], is ruined as shown in Portion **(b)** of Figure **23**. As such, there is a concern that the character having an accent mark, ring [o], above alphabet "A" may be mistaken for a character having accent mark, tilde [~], above alphabet "A" shown in Portion **(c)** of Figure **23**. It should be noted that bitmap data represents characters (including symbols) and figures by a collection of small dots on a screen display.

Following character generating methods have been proposed in order to prevent the deterioration in readability and legibility due to a ruined character of a small dot size.

A conventional character processing apparatus disclosed in Reference 1 generates bitmap data by expanding outline data so as to correspond to a specified character pattern. This outline data is data that includes coordinates of lines for representing an outline shape of a character. In this case, it is determined whether the character will be ruined based on the density of bitmap data. When it is determined that the character will be ruined, that character is replaced with a replacing character, which is unlikely to be ruined even in a small dot size.

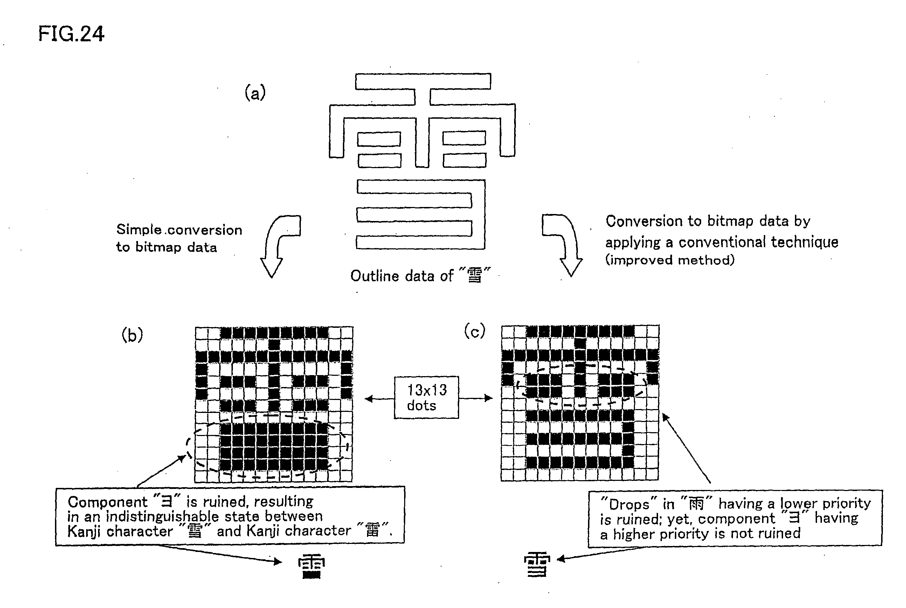

A conventional character generating method disclosed in Reference 2 determines whether a character to be output will be ruined based on a limited resolution that is applied to the character in advance. In the case where it is determined that the character will be ruined, a component having a higher priority is maximized in a usable region based on the order of priority applied to the components in advance without ruining the component having a higher priority, and a dot pattern thereof is generated. In addition, the size of a component having less high priority is slightly reduced, and a dot pattern thereof is generated. This will be described with reference to Figure **24**.

Portions **(a)** of Figure **24** to (c) of Figure **24** are each a diagram for briefly describing the conventional character generating method disclosed in Reference 2.

Portion **(a)** of Figure **24** shows outline data of Kanji character "雪". When this outline data is simply converted to bitmap data, component "ヨ" that is a feature of Kanji character "雪" is ruined, for example, in the case of a size of 13 dots × 13 dots, as shown in Portion (b) of Figure **24**, resulting in an indistinguishable state between Kanji character "雪" and Kanji character "雷". In contrast thereto, in the method disclosed in Reference 2, priorities are set for "雨" and "ヨ" that both are components of Kanji character "雪". The size of component "ヨ" having a higher priority is adjusted such that component "ヨ" is not ruined whereas component "雨", having a lower priority, can be ruined to some degrees. As a result, Kanji character "雪" can be easily distinguished, as shown in Portion **(c)** of Figure **24**.

Reference 1: Japanese Laid-Open Publication No. 09-190172

Reference 2: Japanese Laid-Open Publication No. 06-318063

DISCLOSURE OF THE INVENTION

However, in the conventional character generating method disclosed in Reference 1, there is a problem in which a character ruining cannot be avoided in the case where there is no replacing character for the ruined character. Further, since it is necessary to hold replacing characters in advance, a problem of increasing a required memory capacity occurs.

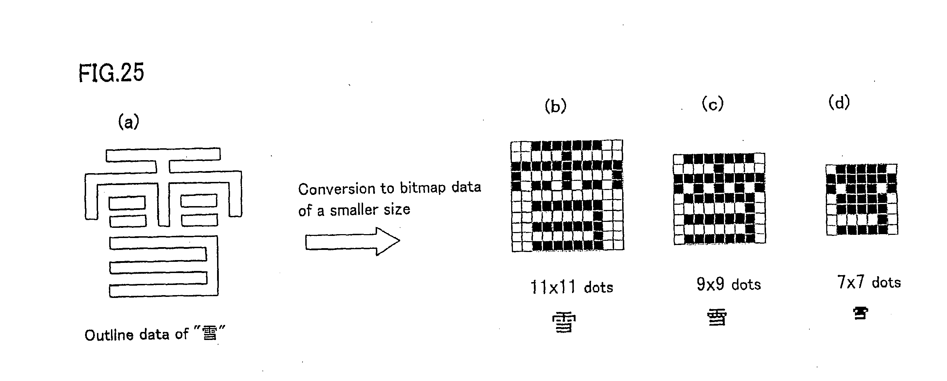

In addition, in the conventional character generating method disclosed in Reference 2, it is possible to avoid the ruining of a component having a higher priority; yet, when the size of a character to be generated becomes smaller, the size of each of the components of the character becomes disproportional, thus impairing the character balance. Further, when the size of a character to be generated is extremely small, it is impossible to avoid the ruining of a component of the character, and thus the entire character is ruined. This problem will be described with reference to Figure **25.**

Portion **(a)** of Figure **25** shows outline data of Kanji character "雪". It is possible to generate bitmap data which can recognize Kanji character "雪" with a character size (13 dots × 13 dots), as described with reference Figure 24, and even with a smaller character size (11 dots × 11 dots) shown in Portion **(b)** of Figure 25. However, in the case of a further smaller size (9 dots × 9 dots), the display quality of the character is deteriorated since the legibility of the character is deteriorated due to the contact of components of the character to each other and the size of each of the components that makeup the character becomes disproportional, as shown in Portion (c) of Figure **25.** In the case of a still further smaller size (7 dots × 7 dots), the character becomes so small that it is neither possible to avoid the ruining of component "雨" of the character nor to avoid the ruining of component "ヨ" of the character, as shown in Portion **(d)** of Figure **25.** As such, the entire character is ruined, and it is not possible to read the character.

The present invention is intended to solve the problems described above. The objective of the present invention is to provide: a character data generating apparatus capable of generating character data while maintaining the balance of components in size and avoiding the ruining of a character by determining a presence of the ruining of the character, using a minimum shape of a component defined in advance and an overlapping process of components, and omitting a stroke of a component without preparing a replacing character, when a character is enlarged/reduced to a specified size; an electronic information device (e.g. , cellular phone apparatus and personal computer) for generating character data using the character data generating apparatus; a character data generating program for causing a computer to execute a character data generating process used in such electronic information devices; and a computer-readable recording medium having the character data generating program recorded thereon.

A character data generating apparatus according to the present invention includes: a storage section for storing minimum shape information in advance for each of a plurality of component data when character data includes the plurality, of component data; and a control section for performing a control in order to generate the character data using a minimum shape of the component as a shape of a component of a character when the character is reduced such that the character is accommodated within a specified character frame and when the component of the character to be reduced is smaller than the minimum shape of the component from the storage section, thereby the objective described above being achieved.

Preferably, in character data generating apparatus according to the present invention, the control section includes: a ratio adjusting section for adjusting a reduction ratio of each of the components of the character within a range such that a shape of each of the components of the character is not smaller than the minimum shape of the component; and a character synthesizing section for using component information representing the shape of each of the components of the character, component-combination information representing a positional relationship between components, and a reduction ratio of each of the components by the ratio adjusting section to reduce each of the components and synthesize vector data of the reduced components.

Still preferably, in a character data generating apparatus according to the present invention, the control section further includes: a component-overlapping section for, when the components are overlapped with each other within the character frame at the time of or after the character synthesis, for arranging and overlapping the overlapped components in a predetermined order of priority.

Still preferably, in a character data generating apparatus according to the present invention, in the case where the component-overlapping section arranges and overlaps the components in the predetermined order of priority, when a component is ruined due to the overlapping of the components, the component-overlapping section is configured to detect this and changes a shape of the component having a lower priority to avoid the ruining due to the overlapping of the component.

Still preferably, in a character data generating apparatus according to the present invention, when the component-overlapping section arranges and overlaps the components in the predetermined order of priority, the component-overlapping section provides a component having a higher priority with a border portion.

Still preferably, a character data generating apparatus according to the present invention further includes: a character data generating section for generating the character data by generating bitmap data based on the vector data of the synthesized components of the character.

Still preferably, in a character data generating apparatus according to the present invention, a plurality of pixels for displaying the character data from the control section is arranged on a display screen, a pixel is used as a display unit, each of the plurality of pixels includes a plurality of sub-pixels, the size of each of the sub-pixels is smaller than the size of the display unit, and each of the sub-pixels corresponds to one of a plurality of color elements, the character data generating apparatus further includes: a display device capable of separately controlling the display of each of the color elements for the sub-pixel, wherein each of the display units that make up the minimum shape of each of the components is configured with sub-pixels.

Still preferably, in a character data generating apparatus according to the present invention, display device includes one or more of sub-pixels and one or more of pixels for representing each of the display units that make up the minimum shape of each of the components.

Still preferably, in a character data generating apparatus according to the present invention, the component information includes: information of component number for each of the components making up the character; information of coordinates of a line representing the shape of the component corresponding to the component number; and information of coordinates of an outer-frame of the component.

Still preferably, in a character data generating apparatus according to the present invention, the component-combination information includes information of a component number and an arrangement of each of the components making up the character; and information of the order of priority of the components that is associated with the readability of each of the components. In this manner, the central axis can be obtained from a character size. In consideration of the central axis, the component-combination information in the character data generating apparatus according to the present invention includes information of a component number and an arrangement of each of the components making up a character, information of the central axes when components are arranged in the upper and lower direction, and information of the order of priority of the components that is associated with the readability of each of the components. Further, since components are combined in the upper and lower direction and the left and right direction, a reference position has more degree of freedom than that of the central axis. This can be recited as follows. In a character data generating apparatus according to the present invention, the component-combination information further includes information of coordinate values of a reference position when the components making up the character are arranged.

Still preferably, in a character data generating apparatus according to the present invention, the minimum shape information includes: information of a component number for each of the components making up the character; information of a number of dots that is required in order to read a component corresponding to the component number; or information of an interval between coordinates which is required in order to read the component.

An electronic information device according to the present invention performs at least one of a display process, a printing process and a communication process on character data that is generated using a character data generating apparatus according to the present invention described above, thereby the objective described above being achieved.

A character data generating program according to the present invention causes a computer to execute a component-shape setting step, wherein a character is made up of a plurality of components, the character is reduced, using minimum shape information in which a minimum shape for each of the plurality of components is defined or information for deriving the minimum shape is stored, such that the character is accommodated within a specified character frame, and when a component of the character to be reduced is smaller than the minimum shape of the component, the component-shape setting step sets the minimum shape of the component as a shape of the component of the character, thereby the objective describe above being achieved.

Preferably, a character data generating program according to the present invention causes the computer to execute a step of overlapping the components in a predetermined order of priority to generate character data when the components are overlapped with each other in the character frame after the component-shape setting step.

A computer-readable recording medium according to the present invention has a character data generating program according to the present invention described above recorded thereon, thereby the objective described above being achieved.

Hereinafter, the functions of the present invention having the structures described above will be described.

According to the present invention, when a character is made up of a plurality of components, a minimum shape is defined for each of the components of the character, or minimum shape information for deriving the minimum shape is added. When a character is reduced (or enlarged), a component is compared to its minimum shape. When the component of the character is smaller than the minimum shape, the minimum shape is adopted as the shape of the component. Thus, it is possible to avoid the ruining of the component of the character and to read the character.

In addition, when components of a character are overlapped with each other, the components of the character are overlapped in a predetermined order of priority such that the effect of the overlapping on the readability and legibility of the character becomes the least as possible. As a result, a component having a lower priority is hidden behind (i.e. , behind a component having a higher priority), and the component having a higher priority that is necessary for the readability and legibility of the character is displayed in the front without being ruined.

Further, when a portion of a component is ruined due to the overlapping of components of a character, the shape of a component having a lower priority is changed. As a result, it is possible to avoid the ruining due to the overlapping of this component.

Further, when components are overlapped with each other in a predetermined order of priority, a component having a higher priority is provided with a border portion. As a result, it is more likely possible to read the component having a higher priority.

Further, a unit of the minimum shape of a component of a character can be represented with a pixel, a sub-pixel or a combination thereof.

As described above, according to the present invention, by defining a minimum shape for each of the components of the character, or adding minimum shape information for deriving the minimum shape, it is possible to compare a component to its minimum shape and detect the ruining of the character in advance when a character is reduced or enlarged.

An enlargement/reduction ratio is separately applied to each of the components, and the components are overlapped with each other in a predetermined order of priority (above and below; top and bottom) such that the size of the minimum shape of each of the components is maintained (i.e., each of the components does not become smaller than its minimum shape). As such, it is possible to generate character data while maintaining the balance of the components in size and avoiding the ruining of the character, unlike the conventional technique disclosed in Reference 2.

Further, it is not necessary to define a replacing character in advance, unlike the conventional technique disclosed in Reference 1, and it is possible to avoid the ruining of each of the components in an assured manner and to read the character.

BRIEF DESCRIPTION OF THE DRAWINGS

Figure **1** is a block diagram showing an exemplary system structure of a character data generating apparatus according to an embodiment of the present invention.

Figure **2** is a block diagram for describing functional sections executed by the control section based on the character data generating program and the data thereof stored in the auxiliary storage apparatus in Figure **1**.
Portions **(a)** to **(c)** of Figure **3** are each a diagram showing an exemplary data structure of the component database in Figure **2**.

Figure **4** is a diagram showing an exemplary data structure of the component-combination database in Figure **2**.
Portions **(a)** to **(c)** of Figure **5** are each a diagram showing an exemplary data structure of the minimum-shape database in Figure **2**.
Portions **(a)** to **(c)** of Figure **6** are each a diagram showing another exemplary data structure of the minimum-shape database in Figure **2**.

Figure **7** is a flowchart for describing the control of the character data generating process based on the character data generating program in Figure **1**.

Figure **8** is a diagram showing an example of the character generating process according to the flowchart in Figure **7**.

Figure **9** is a diagram for describing the process by the character synthesizing section in Figure **2**.

Figure **10** is a flowchart for describing the process by the character synthesizing section in Figure **2**.
Portions **(a)** to **(c)** of Figure **11** are each a diagram for describing an exemplary process by the ratio adjusting section in Figure **2**.
Portions **(a)** to **(c)** of Figure **12** are each a diagram for describing another exemplary process by the ratio adjusting section in Figure **2**.

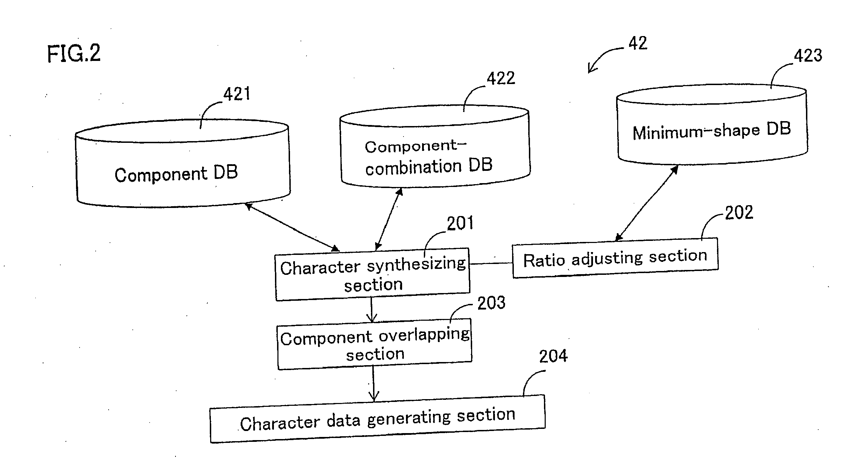

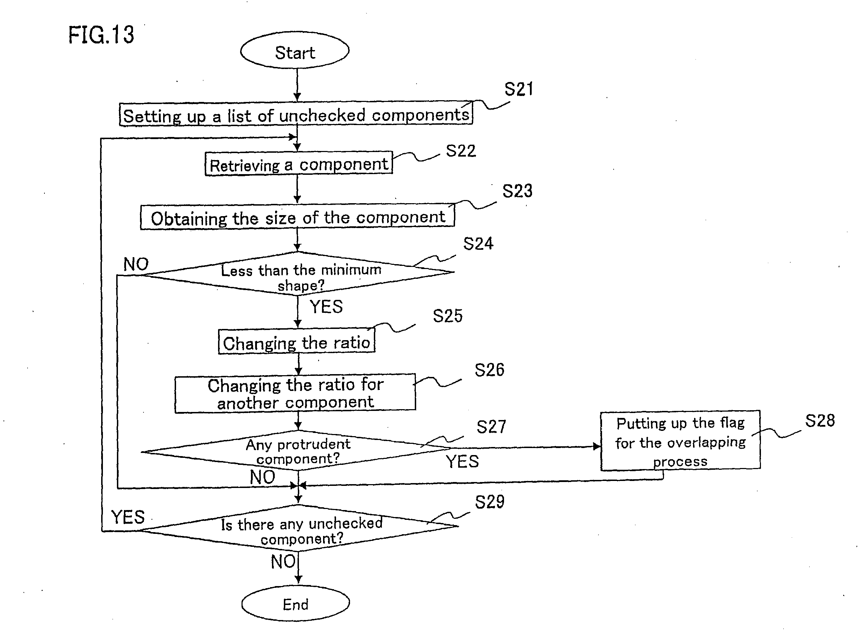

Figure **13** is a flowchart for describing the process by the ratio adjusting section in Figure **2**.

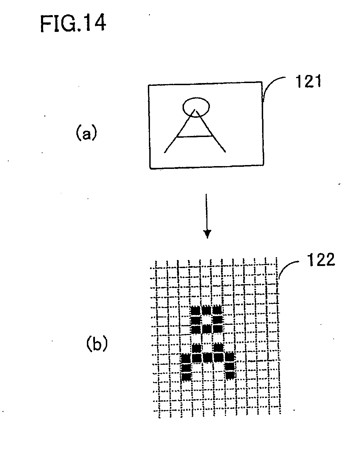

Portions **(a)** and **(b)** of Figure **14** are each a diagram showing an exemplary process by the component-overlapping section in Figure **2**.

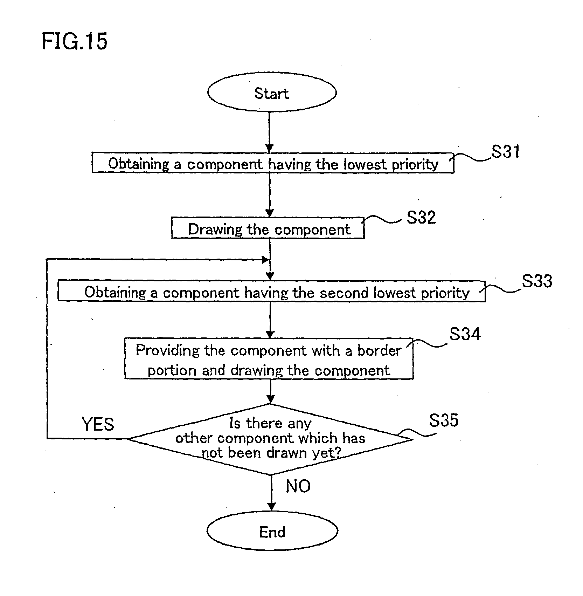

Figure **15** is a flowchart for describing the process by the component-overlapping section in Figure **2**.

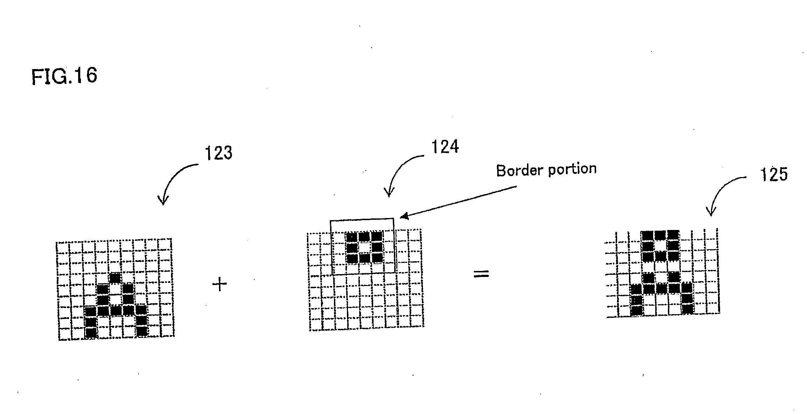

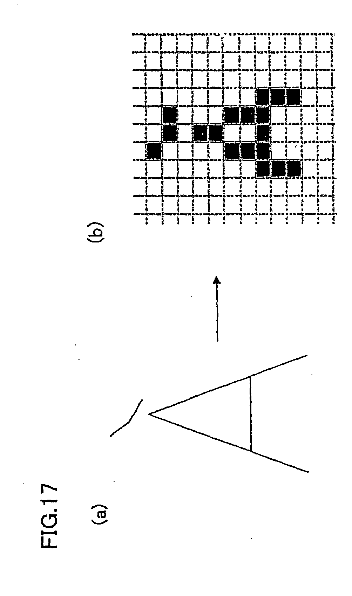

Figure **16** is a flowchart for describing the process of providing a border portion by the component-overlapping section in Figure **2**.
Portions **(a)** and **(b)** of Figure **17** are each a diagram for describing an exemplary process by the character data generating section in Figure **2**.

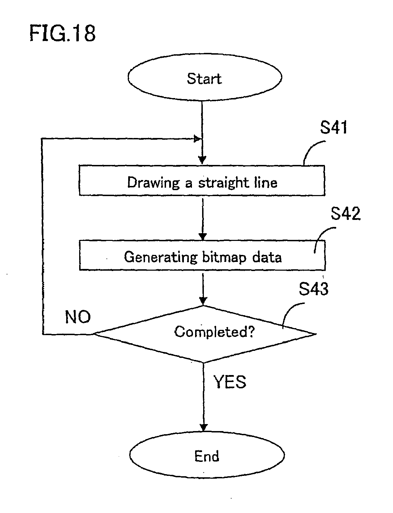

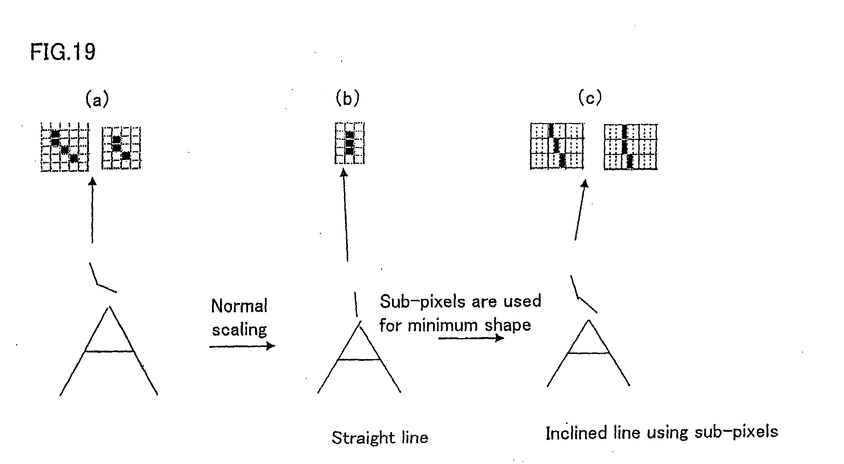

Figure **18** is a flowchart for describing the process by the character data generating section in Figure **2**.
Portions **(a)** to **(c)** of Figure 19 are each a diagram showing an example of adjusting accent mark [grave] above "A" with sub-pixels.

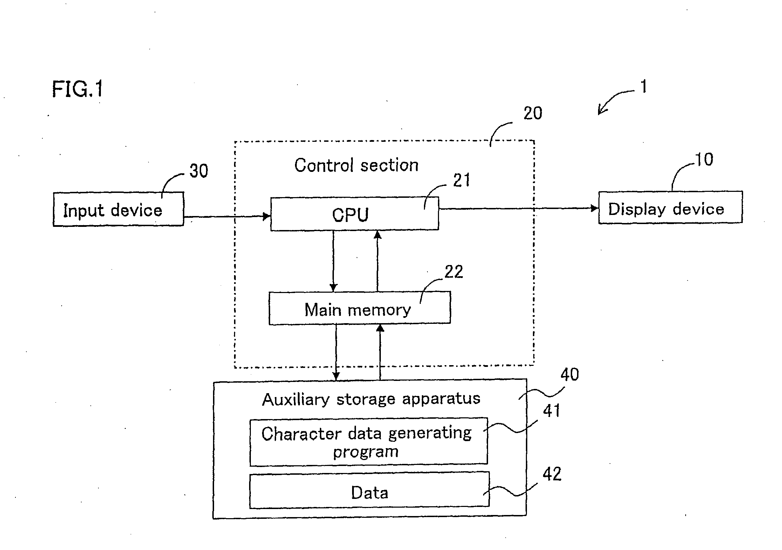

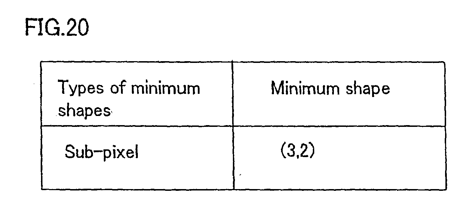

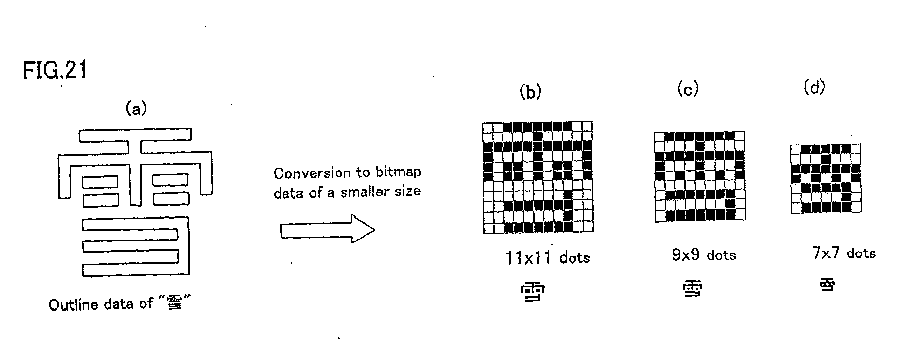

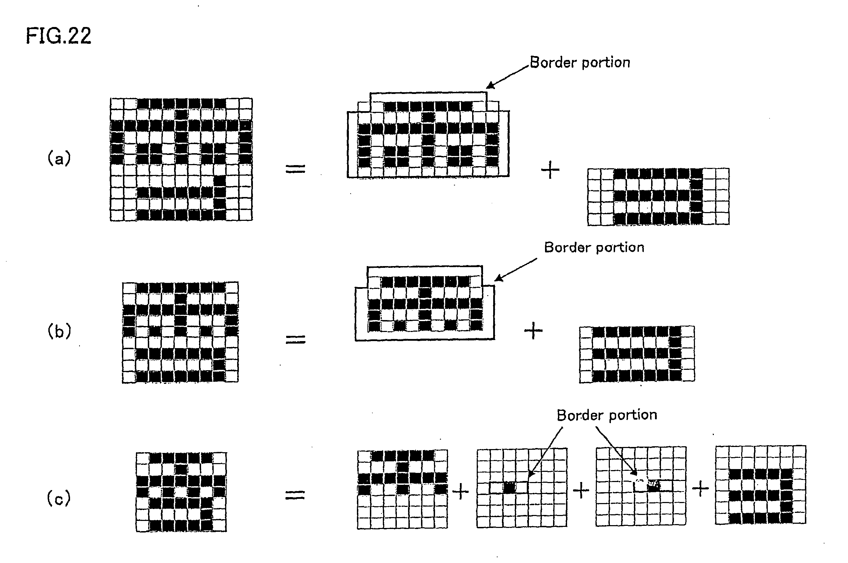

Figure **20** is a diagram showing an example that describes the minimum-shape DB in Figure **2** with sub-pixels.
Portions **(a)** to **(d)** of Figure **21** are each a diagram for describing an example of character data generated by the control section based on the character data generating program and the data thereof in Figure **1**.
Portions **(a)** to **(c)** of Figure **22** are each a diagram for describing a state of overlapping of the components in Figure **21**.
Portions **(a)** to **(o)** of Figure **23** show an example in which ring [o] above "A" in angstrom of a size of 12 dots × 12 dots is ruined due to a size-reducing process of the character in a conventional character data generating apparatus.

Portions **(a)** to **(c)** of Figure **24** are each a diagram for briefly describing the conventional character generating method disclosed in Reference 2.

Figure **25** is a diagram for describing the problem of the conventional character generating method disclosed in Reference 2.

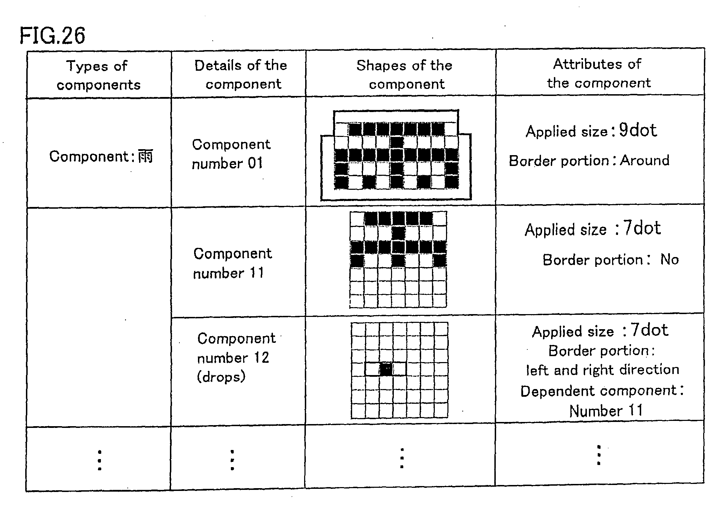

Figure **26** is a diagram showing an example of definitions for how to provide a border portion of the present invention.

**1**     character data generating apparatus
**10**    display device
**20**    control section
**201**   character synthesizing section
**202**   ratio adjusting section
**203**   component overlapping section
**204**   character data generating section
**21**    central processing unit (CPU)
**22**    main memory
**30**    input device
**40**    auxiliary storage apparatus
**41**    character data generating program
**42**    data
**421**   component database
**422**   component-combination database
**423**   minimum-shape database

BEST MODE FOR CARRYING OUT THE INVENTION

Hereinafter, a character data generating apparatus according to the present invention will be described by way of illustrative embodiments with reference to the accompanying drawings. It should be noted that characters referred to herein include languages such as Japanese, English, Korean, Chinese and the like as well as signs such as unit, figures such as ○ and △, and pictorial symbols. In addition, the character data generating apparatus according to the present invention will be described herein. The character data generating apparatus according to the present invention can be used for an electronic information device such as a personal computer and word processor, for example. As a personal computer, an arbitrary type of computer (e.g., desktop-type, laptop-type and the like) can be used. In addition, the character data generating apparatus according to the present invention can be used for an electronic information device including a display section such as display device capable of color display or monochrome display. Other than a personal computer and word processor, for example, a personal digital assistant that is a portable information tool, a cellular phone apparatus including PHS (personal handyphone system), an electronic communication device such as fixed-line telephone/FAX or the like can be used as an electronic information device including a display apparatus such as color liquid crystal display. Further, the character data generating apparatus according to the present invention can be used as an electronic information device for a printing device (printing apparatus) (e.g., printer capable of color printing or monochrome printing).

Figure **1** is a block diagram showing an exemplary system structure of a character data generating apparatus **1** according to an embodiment of the present invention.

In Figure 1, the character data generating apparatus **1** according to the present embodiment includes: a display device 10 that is capable of displaying a character on a display screen; a control section **20** for controlling the display of the display device **10;** an input device **30** for an input operation by a user; and an auxiliary storage apparatus **40** (e.g., ROM) that functions as a computer-readable recording medium, on which a character data generating process program for causing the control section 20 to execute a character data generating process according to the present embodiment and the data of the character data generating process program are recorded.

In the display device **10,** a plurality of pixels (pixel sections), each of which is used as a display unit, is arranged on a display screen in two dimensions (or in a matrix). The display device **10** can display an arbitrary character (including a symbol) by controlling each pixel (pixel section). As an example of the display device **10,** a variety of displays is referred to, such as liquid crystal display, organic EL (electro luminescent) display capable of color display or monochrome display and the like. In addition, as the display device **10,** a display can be appropriately used, in which the display can display characters with monochrome pixels, can control the grayscale level (luminance level) of a pixel, or capable of color display. In the case of the display device **10** that is capable of color display, each pixel (pixel section) on the display screen of the display device **10** includes a plurality of sub-pixels that is obtained by further dividing the pixel (pixel section). A sub-pixel is used as the minimum display unit. Each sub-pixel corresponds to one of the color elements such as RGB. Display data is input to the display device **10** from the control section **20** that will be described next.

The control section 20 includes: a central processing unit (CPU) **21;** and a main memory **22** functioning as a work memory (RAM). The character data generating process according to the present embodiment is performed by the CPU **21** in accordance with the character data generating program and the data thereof in the main memory **22,** and each pixel (pixel section) for display is controlled such that characters and figures are displayed on the display screen of the display device **10.** In the case of the display device **10** that is capable of color display, it is possible to independently control, by the control section **20,** color elements of sub-pixels included in each of the pixels of the display device **10.** The CPU **21** of the control section **20** is connected to the input device **30,** and the main memory **22** is connected to the auxiliary storage apparatus **40.**

The CPU 21 controls and monitors the entire character data generating apparatus **1.** The CPU **21** executes the character data generating program based on a variety of data stored in the main memory **22,** and performs a character data generating process of the present embodiment of adopting a minimum shape as a shape of a component of a character to generate readable character data when the shape of the component of the character is compared to its minimum shape and the shape of the component of the character is smaller than the minimum shape when the character is enlarged/reduced. This character data generating process according to the present embodiment will be described later in detail as a feature of the present invention. The CPU **21** once stores the generated character data in the main memory **22** and then reads and outputs the generated character data as display data to the display device **10.** The CPU **21** manages and controls the timing of the character data to be read from the main memory **22** and to be output to the display device **10.**

The character data generating program and the data thereof stored in the auxiliary storage apparatus **40** of ROM that functions as a computer-readable recording medium are read into the main memory **22** when the CPU **21** is activated. In addition, a variety of data input from the input device **30,** display data for display on the display device **10** and data required in order to execute the character data generating program are temporarily stored in the main memory **22.** The main memory **22** is accessed by the CPU **21.**

The input device **30** is used to input character information for representing characters and figures displayed on the display screen of the display device 10 and/or to input an input instruction (input order) and the like from an operator to the control section **20.** The character information includes, for example, a character code for identifying a character, a character size indicating the size of a character and the like. As the input device **30,** an arbitrary type of device that can input a character code and a character size can be used. As the input device 30, for example, a keyboard, mouse, touch-panel, pen-type input apparatus or input apparatus for performing a re-ception/input via a communication network (e.g., the Internet) can be appropriately used.

The character data generating program **41** and the data **42** thereof (various data used for the program) are stored in the auxiliary storage apparatus **40.** As the auxiliary storage apparatus **40,** an arbitrary type of storage apparatus that functions as a computer-readable recording medium that can store the character data generating program **41** and the data **42** thereof can be used. For example, a variety of computer-readable recording media (e.g., optical disk, magnetic disk, hard disk, CD-ROM, MO, DVD, IC card, optical card) can be appropriately used. It should be noted that the storing of the character data generating program **41** and the data **42** thereof is not limited to the computer-readable recording medium of the auxiliary storage apparatus **40.** For example, the character data generating program **41** and the data **42** thereof can be stored in the main memory **22** in advance. Alternatively, the character data generating program **41** and the data **42** thereof can be stored in a ROM (not shown) other than the auxiliary storage apparatus **40.** This ROM can be, for example, a mask ROM, EPROM, EEPROM, flash ROM or the like. When a ROM is used, it is possible to easily implement a variety of processes in an electronic information device by simply exchanging ROMs. For example, a ROM can be appropriately applied to a portable terminal apparatus or cellular phone apparatus. Further, a computer-readable recording medium for storing the character data generating program **41** and the data **42** thereof can be a medium that carries a program and the data thereof in a mobile manner, such as a communication medium that is used to transfer a program and the data thereof in a communication network (e.g., the Internet) other than a medium that carries a program and the data thereof in a static manner, for example, a storage apparatus, such as a disk or card described above, and a semiconductor memory. Alternatively, when the character data generating apparatus **1** according to the present embodiment includes means for connecting the character data generating apparatus **1** to a communication line including the Internet, the character data generating program **41** and the data **42** thereof can be directly downloaded onto the main memory **22** via the communication line. In this case, a loader program that is necessary for downloading can be stored in any one of ROMs (not shown) in advance. Alternatively, the loader program can be installed in the main memory **22** of the control section 20 from the auxiliary storage apparatus **40.**

Figure **2** is a block diagram for describing functional sections executed by the control section **20** based on the character data generating program **41** and the data **42** thereof stored in the auxiliary storage apparatus **40** in Figure 1.

In Figure 2, a storage section for storing data **42** includes a component database (DB) **421,** a component-combination database (DB) **422** and a component-minimum-shape database (DB) **423.**

The component database (DB) **421** stores component information of a character. The component information includes: information of coordinates of a line representing the shape of each of the components making up a character; and information of coordinates of an outer-frame of the component.

The component-combination database (DB) **422** stores component-combination information for each character. The component-combination information for each character includes: arrangement information of each of the components making up a character; reference position coordinates when components are arranged in the upper and lower direction or in the left and right direction; and the order of priority of the components.

The minimum-shape database (DB) **423** stores minimum shape information for each component. The minimum shape information includes: information of the number of dots required for a component; or information of an interval that is required between coordinates of each component.

Based on the character data generating program **41** and the data **42** thereof, the control section **20** causes the CPU **21** to execute the function of each of a character synthesizing section **201,** a ratio adjusting section **202,** a component overlapping section **203** and a character data generating section **204.** In the case where the size of a character is reduced such that the character is accommodated within a specified character frame, when a component to be reduced is smaller than the minimum shape corresponding to the component which can be obtained from the minimum-shape database (DB) **423,** the control section **20** generates character data using the minimum shape of the component as the shape of the component of the character.

The character synthesizing section **201** uses the component information representing the shape of each of the components of a character, the component-combination information representing a positional relationship between components, and a reduction ratio by the ratio adjusting section **202** to reduce a character made up of the components to a specified size and synthesize the vector data of the reduced components.

The ratio adjusting section **202** adjusts a reduction ratio of each of the components of a character within a range such that the shape of a component of the character is not smaller than the minimum shape of the component.

When components are overlapped with each other within a character frame at the time of or after the character synthesis, the component-overlapping section 203 arranges and overlaps the overlapped components in a predetermined order of priority. In the case where the component overlapping section 203 arranges and overlaps the overlapped components in a predetermined order of priority, when a portion of a component is ruined due to the overlapping of components, the component overlapping section 203 detects this and changes the shape of the component having a lower priority to avoid the ruining due to the overlapping of this component. In addition, when the component overlapping section **203** arranges and overlaps the components in a predetermined order of priority, the component overlapping section **203** provides a component having a higher priority with a border portion.

The character data generating section 204 generates character data by generating bitmap data based on the vector data of the synthesized components of the character by the component overlapping section **203.**

Hereinafter, an exemplary structure of each of the data **42** in Figure **2** will be described one by one.

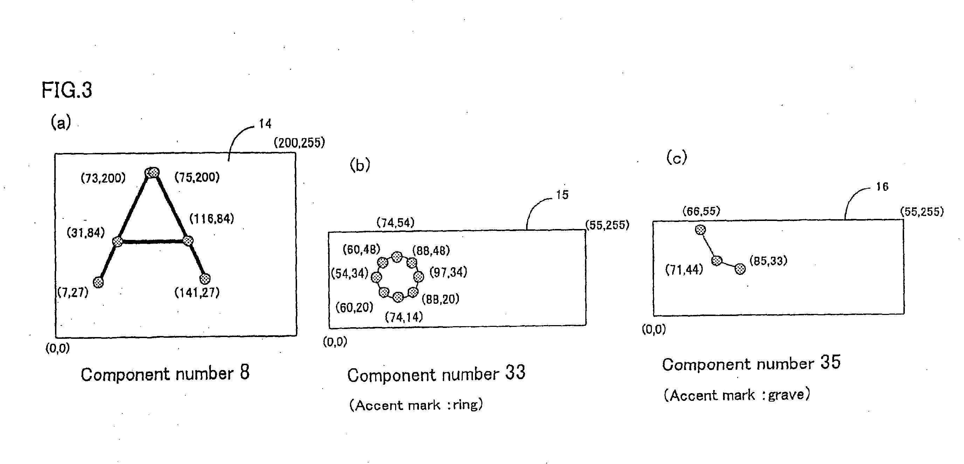

Figure **3** is a diagram showing an exemplary data structure of the component database (DB) **421** in Figure **2.**

As shown in Figure 3, the component DB **421** in Figure **2** stores a plurality of pairs of a component number of each of the components making up a character and component information corresponding to the component number. The component information includes information of coordinates of a line representing the shape of each of the components (coordinates at both sides of the line; coordinates that can derive the line) and information of the maximum and minimum coordinates at the outer-frame of a component (coordinates at corner portions located opposite to each other in a rectangular frame).

For example, as shown Portion **(a)** of Figure **3,** the component having component number 008 is "A", and it is structured by three individual lines for connecting coordinates (73, 200) and coordinates (7, 27), coordinates (75, 200) and coordinates (141, 27), and coordinates (31, 84) and coordinates (116, 84). In addition, the outer-frame of the component having component number 008 is a rectangle having tips of minimum coordinates (0, 0) and maximum coordinates (255, 210) opposing to each other (tips opposing to each other).

In addition, as shown in Portion **(b)** of Figure 3, the component having component number 033 is accent mark [ring], and it is structured by a line for connecting coordinates (74, 54), coordinates (60, 48), coordinates (54, 34),coordinates (60, 20), coordinates (74, 14), coordinates (88, 20), coordinates (97, 34), coordinates (88, 48) and coordinates (74, 54). In addition, the outer-frame of the component having component number 033 is a rectangle having tips of minimum coordinates (0, 0) and maximum coordinates (255, 55) facing to each other (tips opposing to each other) .

Further, as shown in Portion **(c)** of Figure 3, the component having component number 035 is accent mark [grave], and it is structured by a line for connecting coordinates (66, 65), coordinates (71, 44) and coordinates (85, 33). In addition, the outer-frame of the component having component number 035 is a rectangle having tips of minimum coordinates (0, 0) and maximum coordinates (255, 55) facing to each other (tips opposing to each other).

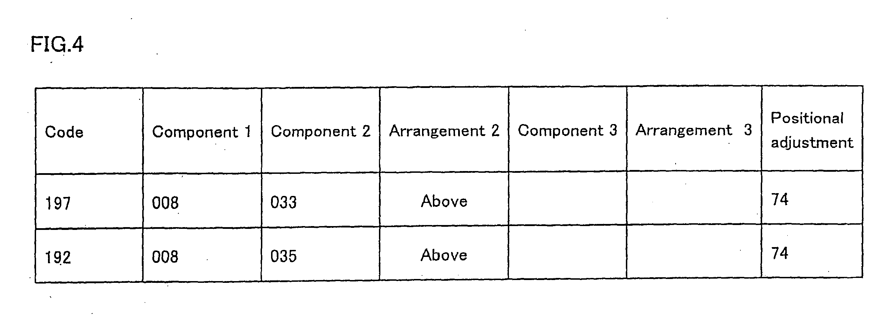

Figure **4** is a diagram showing an exemplary data structure of the component-combination database (DB) **422** in Figure **2.**

As shown in Figure **4,** the component-combination DB **422** in Figure 2 stores a character code representing a character and component-combination information corresponding to the character code. The component-combination information includes information of a component number and an arrangement of each of the components making up a character, information of coordinates of a reference position (e.g., coordinates of the central axis) for adjusting a positional relationship when components are arranged in the upper and lower direction, and information of the order of priority of the components in display that is associated with the readability of each of the components when components are overlapped with each other and displayed. It should be noted that not only are components arranged in the upper and lower direction, but also they can be arranged in the left and right direction.

For example, in Figure **4,** character "angstrom" having character code No. 197 includes a component having component number 008 and a component having component number 033. Information in Arrangement 2, "above", shows the arrangement of the component having component number 033 with respect to the component having component number 008; in this case component [ring] having component number 033 is arranged above component "A" having component number 008. Since there is no third component (Component 3), Component 3 is blank. In addition, it should be noted that for the order of priority of the components, the priority of "A" in Component 1 is the lowest, and the priorities of [ring] in Component 2 and Component 3 become higher in this order. Further, x coordinate of the central axis when component "A" having component number 008 and component [ring] having component number 033 are arranged in the upper and lower direction shows that x coordinate value is 74 (x=74).

A character having character code No. 192 includes component "A" having component number 008 and component [grave] having component number 035. Information in Arrangement 2, "above", shows the arrangement of component [grave] having component number 035 with respect to component "A" having component number 008; in this case the component [grave] having component number 035 is arranged above component "A" having component number 008. Since there is no third component (Component 3), Component 3 is blank. Further, x coordinate of the central axis when component "A" having component number 008 and component [grave] having component number 035 are arranged in the upper and lower direction shows that x coordinate value is 74 (x=74). This value can be obtained as a half of a character width without providing it in the component-combination DB **422.**

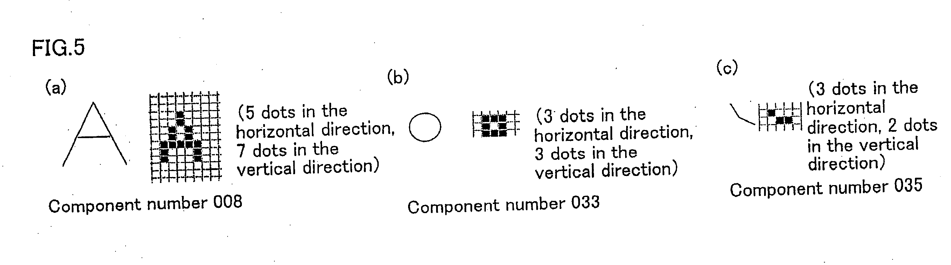

Figure **5** is a diagram showing an exemplary data structure of the component-minimum-shape database (DB) **423** in Figure **2.** The component-minimum-shape DB **423** in Figure 2 stores: a component number of each of the components making up a character; and minimum shape information corresponding to the component number. As shown in Figure **5,** the minimum shape information includes the minimum number of dots that is required in order to read a component of the character. This number is set in advance.

For example, as shown in Portion **(a)** of Figure **5,** the minimum shape of "A" having component number 008 requires 5 dots in the horizontal direction and 7 dots in the vertical direction. In addition, as shown in Portion **(b)** of Figure **5,** the minimum shape of [ring] having component number 033 requires 3 dots in the horizontal direction and 3 dots in the vertical direction. Further, as shown in Portion **(c)** of Figure 5, the minimum shape of [grave] having component number 035 requires 3 dots in the horizontal direction and 2 dots in the vertical direction.

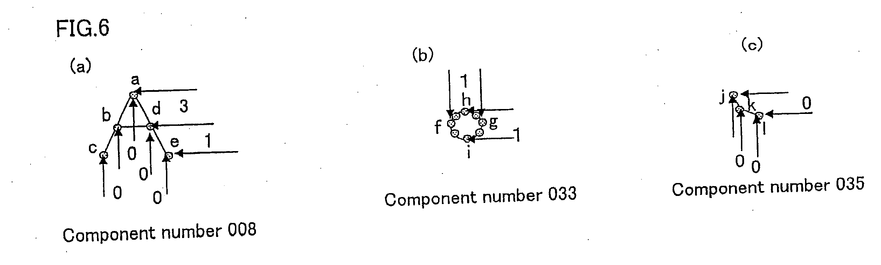

Figure **6** is a diagram showing another exemplary data structure of the component-minimum-shape database (DB) **423** in Figure **2.**

The component-minimum-shape DB **423** in Figure **2** stores: a component number of each of the components making up a character; and minimum shape information corresponding to the component number. As shown in Figure 6, the minimum shape information includes information of a minimum interval (dot number) between coordinates which is at least required in order to read a component. This number is set in advance.

For example, as shown in Portion **(a)** of Figure **6,** in "A" having component number 008, the interval between point **a** and point **b** in the horizontal direction, the interval between point **a** and point **d** in the horizontal direction, the interval between point **b** and point **c** in the horizontal direction, and the interval between point **d** and point **e** in the horizontal direction make up spaces between two corresponding arrows in the vertical direction. It is necessary to provide an interval of greater than or equal to 0 dot in the horizontal direction for each interval. Therefore, greater than or equal to 5 dots including the line width are required for the minimum shape of the entire component "A" in the horizontal direction. Similarly, the interval between point a and point b in the vertical direction, the interval between point **a** and point **d** in the vertical direction, the interval between point **b** and point **c** in the vertical direction, and the interval between point **d** and point **e** in the vertical direction make up spaces between two corresponding arrows in the horizontal direction. It is necessary to provide intervals of greater than or equal to 3 dots and greater than or equal to 1 dot in the vertical direction, respectively. Therefore, greater than or equal to 7 dots including the line width are required for the minimum shape of the entire component "A" in the vertical direction.

In addition, as shown in Portion **(b)** of Figure **6,** in [ring] having component number 033, the interval between point **f** and point **g** in the horizontal direction makes up a space between two corresponding arrows in the vertical direction. It is necessary to provide an interval of greater than or equal to 1 dot in the horizontal direction. Therefore, greater than or equal to 3 dots including the line width are required for the minimum shape of the entire component [ring] in the horizontal direction. Similarly, the interval between point **h** and point **i** in the vertical direction makes up a space between two corresponding arrows in the horizontal direction. It is necessary to provide an interval of greater than or equal to 1 dot in the vertical direction. Therefore, greater than or equal to 3 dots including the line width are required for the minimum shape of the entire component [ring] in the vertical direction.

Further, as shown in Portion (o) of Figure **6, in** [grave] having component number 035, the interval between point **j** andpointkin the horizontal direction and the interval between point **k** and point **l** in the horizontal direction makes up a space between two corresponding arrows in the vertical direction. It is necessary to provide an interval of greater than or equal to 0 dot in the horizontal direction. Therefore, greater than or equal to 3 dots including the line width are required for the minimum shape of the entire component [grave] in the horizontal direction. Similarly, the interval between point **j** and point **l** in the vertical direction makes up a space between two corresponding arrows in the horizontal direction. It is necessary to provide an interval of greater than or equal to 0 dot in the vertical direction. Therefore, greater than or equal to 2 dots including the line width are required for the minimum shape of the entire component [grave] in the vertical direction.

Herein, using a Western alphabet as an example, the shape of each of the components having the same number of strokes as that of the original component has been described for the minimum shape of the component. In the case of a component having numeral number of strokes such as a Kanji radical in Japanese and thus the minimum shape thereof inevitably becoming large, it is possible to define a minimum shape to include omission information of stroke. In such a case, by omitting a stroke, it is possible to use a component having a smaller minimum shape, and thus an effect of improving the balance between components is obtained.

Next, a character data generating process executed by the CPU **21** based on the character data generating program **41** will be described.

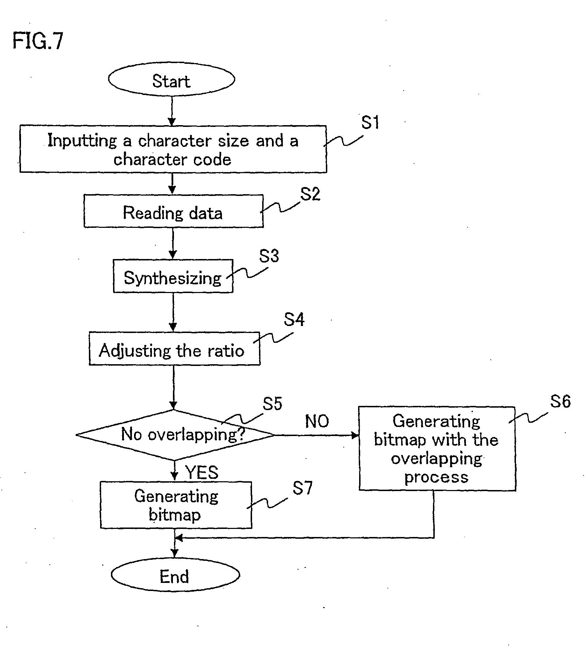

Figure 7 is a flowchart for describing the control of the character data generating process based on the character data generating program **41** in Figure **1.**

As shown in Figure 7, first, in step S1, a character size and a character code are input from the input device **30.**

Next, in step S2, a component number corresponding to a character code is read from the component-combination DB 422 as well as component information corresponding to the component number being read from the component DB **421** by the character synthesizing section **201.**

Further, in step S3, components are synthesized as a character by the character synthesizing section **201** in accordance with information of the arrangement and central axis in the component-combination DB **422.**

Further, in step S4, when a character is enlarged or reduced, it is determined by the ratio adjusting section 202 whether a component of the character is smaller than its minimum shape using the minimum shape information in the component-minimum-shape DB **423.** When a component that is smaller than its minimum shape is detected, the shape of the component is replaced with the minimum shape.

Further, in step S5, when all the components are combined as a character, a flag for an overlapping process is checked. The flag for the overlapping process shows a result of determining whether any of the components protrudes from a character frame of the character (or components are overlapped with each other within the character frame) in a process in the ratio adjusting section **202.** The ratio adjusting section 202 will be described later. When any of the components protrudes from the character frame of the character, i.e. , when the flag for the overlapping process is put up, the process goes to step S6. When any of the components does not protrude from the character frame of the character, i.e., when the flag for the overlapping process is not put up, the process goes to step S7.

Further, in step S6, the components are overlapped with each other by the component overlapping section 203 in accordance with the order of priority in the component-combination DB **422.** In this case, a component having a higher priority drawn on top of the other is provided with a border portion. Bitmap data is generated based on the vector data of the synthesized components of the character by the character data generating section **204.** The details of the process will be later described with reference to Figure **15.**

Further, in step **7,** since there is no need of overlapping components, bitmap data is generated based on the vector data of the synthesized components of the character by the character data generating section 204, without the process by the component overlapping section 203.

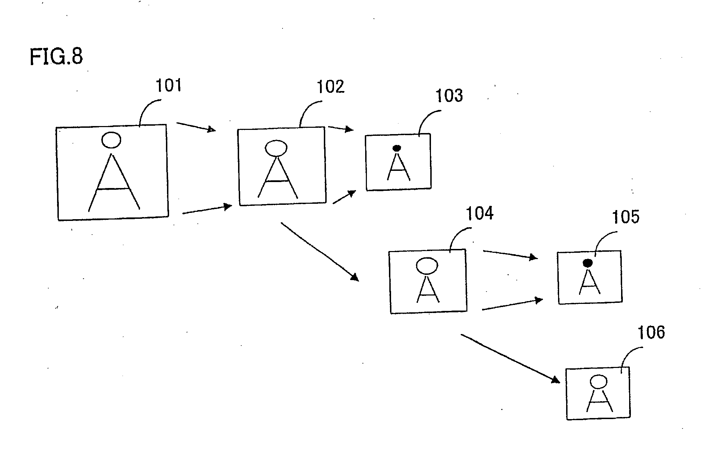

Figure **8** is a diagram showing an example of the character generating process according to the flowchart in Figure **7,** showing a change of the shape of each of the components of a character when the character is reduced for display.

As shown in Figure **8,** original data 101 is reduced to become character **102.** When the original data 101 is further reduced, accent mark [ring: o] is ruined, as shown in character **103.** In order to avoid this, a predetermined minimum shape is adopted as the shape of the accent mark, as shown in character **104.** When character **104** is further reduced, "A" is also ruined, as shown in character 105. Thus, by overlapping "A" and accent mark [ring: o] with each other as shown in character **106,** accent mark "ring: o" is caused to cover the top portion of "A". This is because the priority of accent mark [ring: o] is higher than the priority of "A".

Next, a process by each of the functional sections based on the character data generating program will be described in further detail.

In the character synthesizing section 201 shown in Figure **2,** the vector data having components reduced to a specified size is synthesized by the component DB **421** and the component-combination DB **422.**

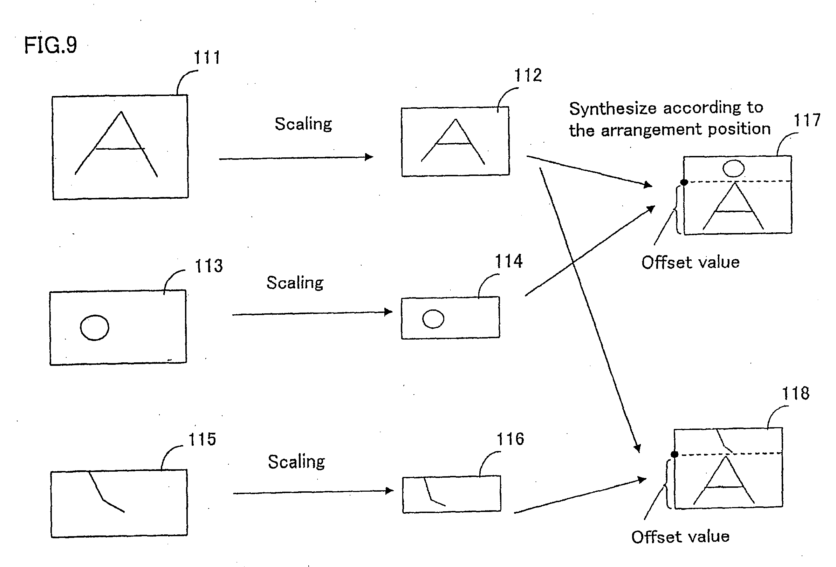

Figure **9** is a diagram showing an exemplary process by the character synthesizing section **201** in Figure **2.**

For example, image **111** of "A" having component number 008 is scaled to image **112,** and image **113** of [ring] having component number 033 is scaled to image **114.** The scaling is performed based on an offset value obtained from the outer-frame having component number 008. Thereafter, as shown in image **117 ,** scaled image **114** of [ring] having component number 033 is arranged at a location that is shifted by an offset amount from scaled image **112** of "A" having component number 008.

On the other hand, image **111** of "A" having component number 008 is scaled to image **112,** and image **115** of [grave] having component number 035 is scaled to image **116.** The scaling is performed based on an offset value obtained from the outer-frame having component number 008. Thereafter, as shown in image **118,** scaled image **116** of [grave] having component number 035 is arranged at a location that is shifted by an offset amount from scaled image **112** of "A" having component number 008.

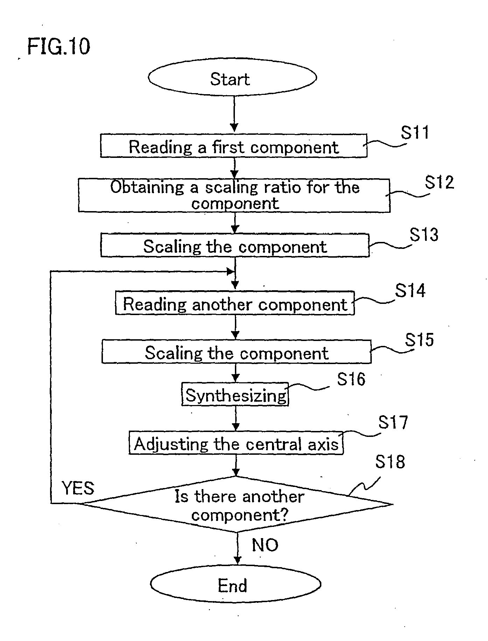

Figure **10** is a flowchart for describing a character synthesizing process by the character synthesizing section **201** in Figure **2.**

As shown in Figure **10 ,** first, in step S11, information of a first component that is registered in the component-combination DB **422** is read from the component DB **421.**

Next, in step S12, output size N of a character to be output is obtained from the input device **30,** and (N-1)/(256-1) is set as a scaling ratio.

Next, in step S13, the first component is scaled based on the scaling ratio.

In step S14, information of a next component that is registered in the component-combination DB **422** is read from the component DB **421.**

In step S15 , the read component is scaled based on the scaling ratio.

In step S16, an offset value of the arrangement position of the second component with respect to the vector data of the first component is obtained. Vector data that is shifted by the offset value is added to the vector data of the second component, and the vector data of the first component and the vector data of the second component are synthesized.

In step S17, the position of each of the components is adjusted such that the central axis of each of the two components matches each other.

In step S18, the process goes back to step S14 when there is another component in the component-combination DB **422.** When there is no other component in the component-combination DB **422,** the character synthesizing process by the character synthesizing section **201** in Figure **2** is completed.

For example, in the case of a character having character code No. 197 (angstrom), when an output size is 12 dots × 12 dots, the scaling of the component having component number 008 is performed as shown below.

In the character having character code No. 197 shown in Figure **3,** component "A" having component number 008 is structured by three individual lines for connecting point (73, 200) and point (7, 27), point (75, 200) and point (141, 27), and point (31, 84) and point (116, 84), as shown in Figure **3.**

Scaled coordinates of point (73, 200) are obtained as coordinates (3, 9) by the following expressions:

$$73 \times 11 \ /255 = 3.1490$$

$$200 \times 11 \ /255 = 8.6274$$

In the above expressions, numeral 11 is -1 of the output size, and numeral 255 is -1 of the original size. In addition, in order to make each of the obtained values an integer, the results of the computations are rounded off. Similarly, point (7, 27) is scaled to coordinates (0, 1). As such, the scaling results of the component having component number 008 are as follows:

(3, 9), (0, 1),
(3, 9), (6, 1),
(1, 4), (5, 4)

Similarly, the scaling results of component [ring] having component number 033 are as follows:

(3,2), (3, 2), (2, 1), (3, 1), (3, 1), (4, 1), (4, 1), (4, 2), (3, 2) ... [1]

In addition, the scaling results of the outer-frame of component "A" having component number 008 are as follows:

minimum coordinates (0, 0), maximum coordinates (11, 9)

As such, for the data to be synthesized as a character for character code No. 197, "9" is added to y coordinate in [1] described above, thus resulting in:

(3, 9), (0, 1)
(3, 9), (6, 1)
(1, 4), (5, 4)
(3, 11), (3, 11), (2, 10), (3, 10), (3, 10), (4, 10), (4, 10), (4, 11), (3, 11)

Similarly, the scaling results of component [grave] having component number 035 are as follows:

(3, 2), (3, 2), (4, 1) ... [2]

As such, for the data to be synthesized as a character for character code No. 192, "9" is added to y coordinate in [2] described above, thus resulting in:

(3, 9), (0, 1)
(3, 9), (6, 1)
(1, 4), (5, 4)
(3, 11), (3, 11), (4, 10)

Next, the ratio adjusting section **202** shown in Figure **2** will be described.

In the case where a character is reduced such that the character is accommodated within a specified character frame by using the component-minimum-shape DB **423,** when a component of a character becomes smaller than a predetermined minimum shape, the ratio adjusting section **202** adopts the minimum shape of the component with the shape of the component of the character and makes an adjustment such that the character is reduced within a range where that the shape of each of the other components does not become smaller than its minimum shape.

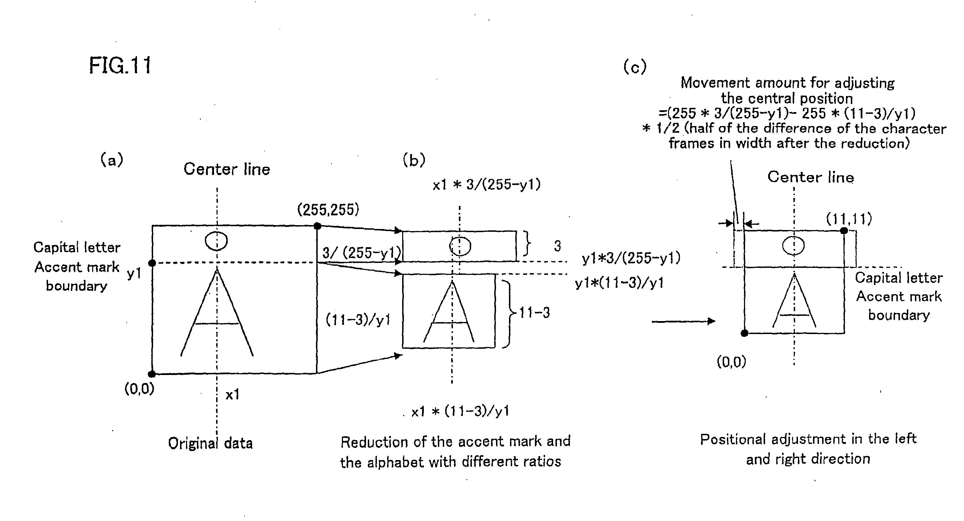

Portion **(a)** of Figure **11** to Portion **(c)** of Figure **11** are each a diagram showing an exemplary process by the ratio adjusting section **202** in Figure **2.**

For example, a case will be considered in which when character data shown in Portion **(a)** of Figure **11** is reduced to a size of 12 dots × 12 dots, i.e., when a capital letter (character) with an accent is reduced to a size of 12 dots × 12 dots, 3 dots are allocated to the accent. In such a case, when the size of the entire character is **12** dots × **12** dots, accent mark [ring] is ruined as shown in Figure **23.** As such, as shown in Portion **(b)** of Figure **11,** a ratio is set such that the minimum shape of accent mark [ring] has 3 dots in each of the vertical and horizontal directions .

In contrast, alphabet "A" is not ruined even when the entire size of the character is 12 dots × 12 dots. In such a case, a ratio is set such that the outer-frame of alphabet "A" has a size of 9 dots × 9 dots, as shown in Portion **(b)** of Figure **11.**

In this case, since offset position y1 of the original data is y1 × 3/(255-yl) for [ring] and y1 × (11-3)/yl for "A" , as shown in Portion **(b)** of Figure 11, these values are used to make a boundary. Then, y coordinate value of [ring] is adjusted in accordance with the position of this boundary.

Further, when different ratios are set for "A" and [ring], the central positions thereof are out of alignment, as shown in Portion **(b)** of Figure **11.** Therefore, as shown in Portion (c) of Figure **11,** the central positions are also adjusted. For the central position in the left and right direction, the central positions of the components that have been reduced with their own ratios can be matched with each other by moving one half of the difference of the character frame in width. Thus, central position x1 of the original data is x1 × 3/(255-y1) for [ring] and x1 × (11-3) /yl for "A" , as shown in Portion (b) of Figure 11. As such, the movement amount for adjusting the central position is (255 × 3 (255-yl)-255 × (11-3)/y1)×1/2. Then, x coordinate of [ring] is adjusted in accordance with this central position.

As a method for adjusting the central position, there is a method for performing a positional adjustment using the reference position information stored in the component-combination DB, for example, using value **74** in "Positional adjustment" for code 197 in Figure **4** as x coordinate value for the central position.

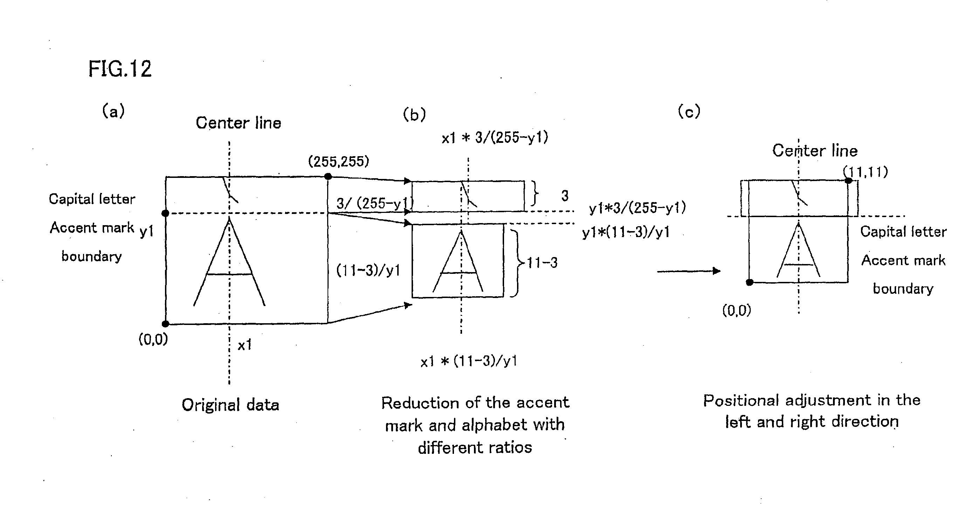

Portion **(a)** of Figure **12** to Portion **(c)** of Figure **12** are each a diagram showing another exemplary process by the ratio adjusting section **202** in Figure **2.**

For example, a case will be considered in which when character data shown in Portion **(a)** of Figure 12 is reduced to a size of 12 dots × 12 dots, i.e., when a capital letter (character) with an accent is reduced to a size of 12 dots × 12 dots, 3 dots are allocated to the accent. In such a case, when the size of the entire character is 12 dots × 12 dots, accent mark [grave] is ruined as in the case of the above. As such, as shown in Portion **(b)** of Figure 12, a ratio is set such that the minimum shape of accent mark [grave] has 3 dots in the vertical direction and 2 dots in the horizontal direction.

In contrast, alphabet "A" is not ruined even when the entire size of the character is 12 dots × 12 dots. In such a case, a ratio is set such that the outer-frame of alphabet "A" has a size of 9 dots × 9 dots, as shown in Portion **(b)** of Figure **12.**

In this case, since offset position y1 of the original data is y1 × 3/(255-y1) for [grave] and y1 × (11-3) /y1 for "A" , as shown in Portion **(b)** of Figure **12,** these values are used to make a boundary. Then, y coordinate value of [grave] is adjusted in accordance with the position of this boundary.

Further, when different ratios are set for "A" and [grave], the central positions thereof are out of alignment, as shown in Portion **(b)** of Figure **12.** Therefore, as shown in Portion **(c)** of Figure **12,** the central positions are also adjusted. For the central position in the left and right direction, the central positions of the components that have been reduced with their own ratios can be matched with each other by moving one half of the difference of the character frames in width. Thus, central position x1 of the original data is x1 × 3 / (255-yl) for [grave] and x1 × (11-3)/yl for "A" , as shown in Portion **(b)** of Figure **12.** As such, the movement amount for adjusting the central position is (255 × 3 (255-yl)-255 × (11-3)/y1)×1/2. Then, x coordinate of [grave] is adjusted in accordance with this central position.

As a method for adjusting the central position, there is a method for performing a positional adjustment using the reference position information stored in the component-combination DB, for example, using value **74** in "Positional adjustment" for code 192 in Figure **4** as x coordinate value for the central position.

As a method for scaling components in the character synthesizing process described with reference to Figure **10,** Figure **11** and Figure **12,** a description has been made regarding a method in which components are scaled with their own ratios and thereafter, the central axes thereof are aligned. Alternatively, a method can be used in which components are scaled at their own ratios using the central axes of the components as an origin when the computation of the scaling is performed (not shown). In this case, it is not necessary to align the central axes afterwards.

Figure **13** is a flowchart for describing the process by the ratio adjusting section **202** in Figure **2.**

As shown in Figure **13,** first, in step S21, a list of component numbers is created for the components, for which the minimum shape of each of the components of a character has not been checked yet.

Next, in step S22 , a component number for an unchecked component is retrieved from the list of the component numbers for the components, for which the minimum shape has not been checked yet.

Thereafter, in step S23, the scaled coordinates of a box bounding a component are obtained.

In step S24, it is checked whether either the side in the vertical direction or the side in the horizontal direction of the box bounding the component is smaller than its minimum shape. When one of the side in the vertical direction and the side in the horizontal direction of the box bounding the component is smaller than its minimum shape in the vertical or horizontal direction (YES), the process goes to step S25. Otherwise (NO), the process goes to step S29.

In step S25, the minimum shape is adopted as the shape of the component to be processed.

Next, in step S26, a ratio is adjusted such that the size of the character is reduced within a range where the shape of each of the other components does not become smaller than the minimum shape thereof (while maintaining the balance in size).

In step S27, it is determined whether any of the outer-frames of the components protrudes from the character frame when the outer-frames are combined into the character frame. When it is determined that any of the outer-frames of the components protrudes from the character frame when the outer-frames are combined into the character frame (YES), the process goes to step S28. When it is determined that any of the outer-frames of the components does not protrude from the character frame when the outer-frames are combined into the character frame (NO), the process goes to step S29.

In step S28, a flag for an overlapping process is put up, and the process goes to step 529.

In step S29, it is determined whether there is still any unchecked component. When it is determined that there is still an unchecked component (YES), the process goes back to the process of retrieving the component in step S22. When it is determined that there is no unchecked component (NO), the ratio adjusting process by the ratio adjusting section 202 is completed.

For example, when the character having character code No. 197 (angstrom) is reduced to a size of 12 dots × 12 dots and then output, component number 008 and component number 033 are included in the first list. Component number 033 is retrieved from the list and component [ring] having component number 033 is scaled. The scaling results are as follows, as shown in [1] described above:

(3, 2), (3, 2), (2, 1), (3, 1), (3, 1), (4, 1), (4, 1), (4, 2), (3, 2)

As such, the size of the box bounding the scaled [ring] is 3 dots in the horizontal direction and 2 dots in the vertical direction. Since the size of the box is smaller than the minimum shape (3 dots in the horizontal direction, 3 dots in the vertical direction) registered in the minimum-shape DB 423, the shape of component [ring] is replaced with the minimum shape thereof.

In this case, the scaling ratio of the other component "A" is adjusted to (11-3)/210. It should be noted that numeral 210 indicates the vertical width of the outer-frame of the component having component number 008. When the coordinates of the points making up component "A" are scaled with the scaling ratio of (11-3)/210, the coordinates of "A" become:

(3, 8), (0, 1)
(3, 8), (5, 1)
(1, 3), (4, 3)

As such, since the size of the box bounding the scaled "A" is 6 dots in the horizontal direction and 8 dots in the vertical direction and is larger than the minimum shape of component "A", this scaling ratio is adopted.

In this case, the central axis of "A" and the central axis of [ring] are out of alignment, as shown in Portion **(b)** of Figure **11.** Therefore, the central axes are caused to be aligned. Herein, the value of the central axis of each of "A" and [ring] (X = 74) is set in the component-combination DB **422.** Alternatively, this value can be obtained as a half of the width of the character. The value is multiplied by the scaling ratio 8/210 of "A" and the scaling ratio 3/55 of [ring]. The obtained values are respectively:

$$74 \times 8/210 = 2.8190$$

$$74 \times 3/55 = 4.036$$

When the values are rounded off, they become "3" and "4", respectively. Thus, [ring] is shifted to the left by "1", which is the difference between "3" and "4".

In addition, as another example, when the character having character code No. 192 is reduced to a size of 12 dots × 12 dots and then output, component number 008 and component number 035 are included in the first list. Component number 035 is retrieved from the list and component [grave] having component number 035 is scaled. The scaling results are as follows, as shown in [2] described above:

(3, 2), (3, 2), (4, 1)

As such, the size of the box bounding the scaled [grave] is 2 dots in the horizontal direction and 2 dots in the vertical direction. Since the size of the box is smaller than the minimum shape (3 dots in the horizontal direction, 2 dots in the vertical direction) registered in the minimum-shape DB 423, the shape of component [grave] is replaced with the minimum shape thereof.

In this case, the scaling ratio of the other component "A" is adjusted to (11-3)/210. It should be noted that numeral 210 indicates the vertical width of the outer-frame of the component having component number 008. When the coordinates of the points making up component "A" are scaled with the scaling ratio of (11-3)/210, the coordinates of "A" become:

(3, 8), (0, 1)
(3, 8), (5, 1)
(1, 3), (4, 3)

As such, since the size of the box bounding the scaled "A" is 6 dots in the horizontal direction and 8 dots in the vertical direction and is larger than the minimum shape of component "A", this scaling ratio is adopted.

In this case, the central axis of "A" and the central axis of [grave] are out of alignment, as shown in Portion (b) of Figure 12. Therefore, the central axes are caused to be aligned. Herein, the value of the central axis of each of "A" and [grave] (X = 74) is set in the component-combination DB 422. The value is multiplied by the scaling ratio 8/210 of "A" and the scaling ratio 3/55 of [grave]. The obtained values are respectively:

$$74 \times 8/210 = 2.8190$$

$$74 \times 3/55 = 4.036$$

When the values are rounded off, they become "3" and "4", respectively. Thus, [grave] is shifted to the left by "1", which is the difference between "3" and "4".

Next, the component overlapping section 203 shown in Figure 2 will be described in detail.

When components are overlapped with each other within a character frame, the component overlapping section 203 overlaps the components in a predetermined order of priority to generate character data. In addition, a component having a higher priority is provided with a border portion. Further, when a portion of a component is ruined due to the overlapping of components , the shape of a component having a lower priority is changed to avoid the ruining due to the overlapping of this component.

Figure 14 is a diagram showing an exemplary process by the component overlapping section 203 in Figure 2.

As shown in Portion (a) of Figure 14, since the output size of a character is small, there is a case in which components are overlapped with each other, as shown in character 121 even if the minimum shapes of all the components are adopted. In such a case, as shown in character 122 shown in Portion (b) of Figure 14, the components are overlapped with each other in accordance with a predetermined order of priority, and the component to be provided on top of the other is subject to a process of providing a border portion therewith.

Figure 15 is a flowchart for describing the process by the component overlapping section 203 in Figure 2.

As shown in Figure 15, first, in step S31, a component number for a component having a lower priority is selected from the component-combination DB 422.

Next, in step S32, a line for connecting points for the component is drawn.

Thereafter, in step S33, a component number for a component having a higher priority is selected from the component-combination DB 422.

Next, in step S34, a line for connecting points for the component is subject to a process of providing a border portion therewith and then drawn.

In step S35, if there is any component which has not been drawn (YES), the process goes back to step S33. If there is no other component to be drawn (NO), the overlapping process is completed.

For example, when the output size is 9 dots × 9 dots, the scaling results of component "A" are as follows:

(2, 6), (0, 1)
(2, 6), (4, 1)
(1, 3), (4, 3)

Therefore, since the size of the box bounding the scaled "A" is 5 dots in the horizontal direction and 6 dots in the vertical direction, and is larger than the minimum shape of component "A", this scaling ratio is adopted.

In addition, the scaling results of component [ring] are as follows:

(2, 2), (2, 2), (2, 1), (2, 1), (2, 0), (3, 1), (3, 1), (3, 2), (2, 2)

As such, since the size of the box bounding the scaled [ring] is 2 dots in the horizontal direction and 3 dots in the vertical direction, and is larger than the minimum shape of component [ring], this scaling ratio is adopted.

The addition of 5 dots in the horizontal direction and 7 dots in the vertical direction of the box bounding the minimum shape of "A" and the 3 dots in the horizontal direction and 3 dots in the vertical direction of the box bounding the minimum shape of [ring] results in 10 dots in the vertical direction, thus protruding from the character frame of 9 dots × 9 dots.

In such a case, [ring] is caused to cover the top portion of "A" by the component overlapping section 203. First, as shown in image **123** in Figure **16,** "A" is drawn within the character frame of 9 dots × 9 dots.

Next, as shown in image **124** in Figure **16,** [ring] provided with a border portion is drawn. As a result of a synthesis thereof, character data (bitmap data) shown in image 125 in Figure **16** is generated.

Next, the character data generating section 204 shown in Figure **2** will be described in detail.

The character data generating section 204 generates bitmap data based on the vector data in which a plurality of components is reduced to a specified size and synthesized.

Portion **(a)** of Figure **17** and Portion **(b)** of Figure **17** are each a diagram showing an exemplary process by the character data generating section **204** in Figure **2.**

As shown in Portion **(a)** of Figure **17,** a process of connecting, with a line, points in the vector data in which a plurality of components is reduced to a specified size and synthesized is performed, and corresponding bitmap data is generated as shown in Portion **(b)** of Figure **17.**

Figure **18** is a flowchart for describing the process by the character data generating section **204** in Figure 2.

As shown in Figure **18,** first, in step S41, the coordinates of two points in the vector data are obtained, and a straight line for connecting the two points is drawn, as shown in Portion **(a)** of Figure **17.**

Next, in step S42, as shown in Portion **(b)** of Figure **17 ,** bitmap data corresponding to the drawing of the straight line is generated.

Thereafter, in step S43, if there is any unprocessed point (Completed?; NO), the process goes back to step S41. If there is no unprocessed point (Completed?; YES), the character data generating process by the character data generating section **204** is completed.

In the above description, a minimum shape is represented with a pixel. However, in a display device capable of color display, a plurality of sub-pixels is included in each of the pixels in the display device 10. A unit of a sub-pixel is used as a minimum display unit. When each sub-pixel corresponds to one of the color elements such as RBG, it is possible to represent a minimum shape of a component with a sub-pixel. In addition, it is possible to represent a minimum shape of a component with a combination of a pixel and a sub-pixel.

Figure **19** is a diagram showing an example of adjusting accent mark [grave] of "A" with sub-pixels.

When original character data having the shape shown in Portion **(a)** of Figure 19 is scaled, the inclination in [grave] is lost in a small size, as shown in Portion **(b)** of Figure **19.**

In this case, by representing [grave] with sub-pixels of RGB, when sub-pixels are arranged in the horizontal direction (x direction), the resolution in the horizontal direction becomes three times as high as that in the case of a pixel. Therefore, as shown in Portion **(c)** of Figure **19,** it is possible to represent the inclination with a single pixel in the horizontal direction. In practice, a gray-scale pattern is set for a predetermined number of sub-pixels such that the coloring does not occur.

Figure **20** is a diagram showing an example that describes the minimum-shape DB **423** in Figure 2 with sub-pixels.

Herein, the minimum shape of [grave] having component number 035 is represented with sub-pixels, and it is represented with 3 sub-pixels in the horizontal direction and 2 sub-pixels in the vertical direction.

As describe above, based on the character data generating program **41** and the data **42** thereof, the character data generating apparatus **1** according to the present embodiment can detect the ruining of components by comparing each of the components with its minimum shape when a character is enlarged/reduced, with the use of the minimum-shape DB **423** in which a minimum shape is defined for each of the components of a character or information for deriving the minimum shape is stored. In addition, by separately applying an enlargement/reduction ratio to each of the components by the ratio adjusting section 202 in order to at least maintain the size of the minimum shape and by overlapping the components in a predetermined order of priority by the component overlapping section 203, it is possible to generate character data while maintaining the balance of the components in size and avoiding the ruining of each of the components, unlike the conventional technique disclosed in Reference 2. Further, it is not necessary to define a replacing character, unlike the conventional technique disclosed in Reference 1, and it is possible to avoid the ruining of a component in an assured manner. Thus, when a character is reduced to a specified size, it is possible to determine the ruining of the character and to generate character data while maintaining the balance of the components in size and avoiding the ruining of each of the components without preparing a replacing character in advance.

Hereinafter, examples of character data generated by the character data generating apparatus 1 according to the present embodiment will be described with reference to Figure 21 and Figure **22.**

For example, when bitmap data of Kanji character " 霤 " having a small size is generated from outline data of Kanji character "霤" shown in Portion **(a)** of Figure 21, the bitmap data having a size of 11 dots ×11 dots is generated as shown in Portion **(b)** of Figure 21. In addition, in the case of a size of 9 dots × 9 dots, the bitmap data is generated as shown in Portion **(c)** of Figure **21.** Further, in the case of a size of 7 dots × 7 dots, the bitmap data is generated as shown in Portion **(d)** of Figure **21.**

The state of overlapping the components of the character in Portion **(a)** of Figure **21** and Portion **(d)** of Figure **21** will be described with reference to Portion **(a)** of Figure **22** to Portion **(c)** of Figure **22**.

Portion **(a)** of Figure **22** shows a state of generating the bitmap data of Kanji character "雪" to have a character size of 11 dots × 11 dots, as in the case of Portion **(b)** of Figure **21**.

In this case, component "ヨ" is generated to have the minimum shape such that component "ヨ" is not ruined. In addition, component "雨" is generated while maintaining the balance of component "雨" with component "ヨ" in size (in step S26 in Figure **13,** a character size is reduced within a range where the component to be processed does not become smaller than the minimum shape thereof. Component "雨" is set to have a size that is balanced with the minimum shape of "ヨ".). The generated result of component "雨" is provided with a border portion, and a portion of component "雨" is overlapped with the generated result of component "ヨ" to obtain character data of "雪". In the generated character data of "雪", the portion at the top in the horizontal lines of component "ヨ" is hidden behind the border portion of component "雨". This is because the dots that correspond to the background of component "雨" (white dots) are given a precedence over the dots of the horizontal lines of component "ヨ".

Herein, in the component-combination DB **422,** the priority of component "雨" is higher. Thus, component " 雨" is overlapped upon component "ヨ" and provided with a border portion. On the other hand, in the component-combination DB **422, when** the priority of component " ヨ" is higher, component "ヨ" is overlapped upon component "雨" and provided with a border portion.

Portion **(b)** of Figure 22 shows a state of generating the bitmap data of Kanji character "雪" to have a character size of 9 dots × 9 dots, as in the case of Portion **(c)** of Figure **21**.

In this case, component "ヨ" is generated to have the minimum shape such that component "ヨ" is not ruined. In addition, component "雨" is generated while maintaining the balance of component "雨" with component "ヨ" in size. The generated result of component "雨" is provided with a border portion, and a portion of component "雨" is overlapped with the generated result of component "ヨ" to obtain character data of "雪". In the generated character data of "雪", the portion at the top in the horizontal lines of component "ヨ" is hidden behind the border portion of component "雨".

Portion **(c)** of Figure **22** shows a state of generating the bitmap data of Kanji character "雪" to have a character size of 7 dots × 7 dots, as in the case of Portion **(d)** of Figure **21**.

Since component "雨" cannot be represented with a character size of 7 dots × 7 dots, "drops" in "雨" is separated as another component (the "drops" can be provided for each size in the component DB **421.** In addition, in the case where component "雨" is ruined, a component group in which components are segmented can be used as a minimum shape). Herein, the "drops" that is originally made up of two points is made up of one point in a small size. This can possible by defining the minimum shape with an addition of information of the omission of stroke (including a point) thereto. The generated result of "drops" in component "雨" is provided with a border portion, and is overlapped with the generated result of the other portions of component "雨" (the other portions are generated while maintain the balance in size with component "ヨ") to generate data of component "雨". The reason why the border portion for "drops" is only provided in the left and right direction is that the way of providing a border portion (around, in the left and right direction, in the upper and lower direction and the like) is defined in each case in accordance with the size of component, as shown in Figure **26** that shows an example of definitions for providing a border portion. For example, in a character with a size of 7 dots × 7 dots, components having component number 11 and component number 12 are applied to component "雨", and "drops" having component number 12 are provided with a border portion in the left and right direction while component "ヨ" is generated to have the minimum shape such that component "ヨ" is not ruined. The generated result of component "雨" is overlapped with the generated result of component "ヨ" to obtain character data of Kanji character "雪". In the generated character data of Kanji character "雪", the portion at the top in the horizontal lines of component "ヨ" is hidden behind a portion of component " 雨" and the border portion.

As described above, according to the character data generating apparatus **1** of the present embodiment, it is possible to prevent the illegibility due to the ruining of an entire character by avoiding the deterioration in legibility due to the contact of components to each other and by avoiding the disproportion of the size of a component.

The above description has been made regarding an example in which alphabet "A" having accent mark [ring] or [grave] and Kanji character "雪" are generated. However, the present invention can be applied to characters of other languages. For example, in the case of a character with a voiced sound symbol or semi-voiced sound symbol in Hiragana (Japanese syllabary characters), it is possible, by applying the present invention, to prevent the deterioration in readability/legibility due to a ruined voiced sound symbol or semi-voiced sound symbol. In addition, even in the case of Hangeul characters in Korean language, when a character is represented with a combination of a plurality of components, it is possible to apply the present invention thereto. Further, the above description has been made regarding a character data generating apparatus including a display device and displaying a character on the display device. Alternatively, the present invention can be applied to a character data generating apparatus including a printing device and printing a character by the printing device.

As described above, the present invention is exemplified by the use of its preferred embodiment(s). However, the present invention should not be interpreted solely based on the embodiment(s) described above. It is understood that the scope of the present invention should be interpreted solely based on the claims. It is also understood that those skilled in the art can implement equivalent scope of technology, based on the description of the present invention and common knowledge from the description of the detailed preferred embodiment(s) of the present invention. Furthermore, it is understood that any patent, any patent application and any references cited in the present specification should be incorporated by reference in the present specification in the same manner as the contents are specifically described therein.

INDUSTRIAL APPLICABILITY

According to the present invention, in a field of: a character data generating apparatus capable of suppressing the deterioration in readability and legibility due to a conspicuous ruined character of a small dot size when character data is enlarged/reduced to a specified size; a character display device (display apparatus) (e. g., liquid crystal display, organic EL (electro luminescent) display and the like) for generating character data using the character data generating apparatus; electronic information devices, such as communication apparatuses capable of communicating each other via a communication network, a printing device (printing apparatus) (e.g., printer), a cellular phone apparatus and a personal computer; a character data generating program for causing a computer to execute a character data generating process used in such electronic information devices; and a computer-readable recording medium having the character data generating program recorded thereon, when a character is displayed on a display screen or when a character is printed on a paper, by defining a minimum shape for each of the components of the character, or adding minimum shape information for deriving the minimum shape, it is possible to compare a component to its minimum shape and detect the ruining of the character in advance when a character is reduced or enlarged. When it is detected that a component is ruined, an enlargement/reduction ratio is separately applied to each of the components, and the components are overlapped with each other in a predetermined order of priority such that the size of the minimum shape of each of the components is maintained. As such, it is possible to generate character data while maintaining the balance of the components in size and avoiding the ruining of the character, unlike the conventional technique disclosed in Reference 2. Further, it is not necessary to define a replacing character in advance, unlike the conventional technique disclosed in Reference 1, and it is possible to avoid the ruining of each of the components in an assured manner and to read the character.

**Claims**

1. A character data generating apparatus comprising:

a storage section for storing minimum shape information in advance for each of a plurality of component data when character data includes the plurality of component data; and a control section for performing a control in order to generate the character data using a minimum shape of the component as a shape of a component of a character when the character is reduced such that the character is accommodated within a specified character frame and when the component of the character to be reduced is smaller than the minimum shape of the component from the storage section.

2. A character data generating apparatus according to claim 1, wherein the control section includes:

a ratio adjusting section for adjusting a reduction ratio of each of the components of the character within a range such that a shape of each of the components of the character is not smaller than the minimum shape of the component; and a character synthesizing section for using component information representing the shape of each of the components of the character, component-combination information representing a positional relationship between components, and a reduction ratio of each of the components by the ratio adjusting section to reduce each of the components and synthesize vector data of the reduced components.

3. A character data generating apparatus according to claim 1, wherein the control section further includes:

a component-overlapping section for, when the components are overlapped with each other within the character frame at the time of or after the character synthesis, for arranging and overlapping the overlapped components in a predetermined order of priority.

4. A character data generating apparatus according to claim 3, wherein in the case where the component-overlapping section arranges and overlaps the components in the predetermined order of priority, when a component is ruined due to the overlapping of the components, the component-overlapping section is configured to detect this and changes a shape of the component having a lower priority to avoid the ruining due to the overlapping of the component.

5. A character data generating apparatus according to claim 3, wherein when the component-overlapping section arranges and overlaps the components in the predetermined order of priority, the component-overlapping section provides a component having a higher priority with a border portion.

6. A character data generating apparatus according to claim 1, further comprising: a character data generating section for generating the character data by generating bitmap data based on the vector data of the synthesized components of the character.

7. A character data generating apparatus according to claim 1, wherein a plurality of pixels for displaying the character data from the control section is arranged on a display screen, a pixel is used as a display unit, each of the plurality of pixels includes a plurality of sub-pixels, the size of each of the sub-pixels is smaller than the size of the display unit, and each of the sub-pixels corresponds to one of a plurality of color elements,
the character data generating apparatus further comprising:

   a display device capable of separately controlling the display of each of the color elements for the sub-pixel,

wherein
each of the display units that make up the minimum shape of each of the components is configured with sub-pixels.

8. A character data generating apparatus according to claim 7, wherein the display device includes one or more of sub-pixels and one or more of pixels for representing each of the display units that make up the minimum shape of each of the components.

9. A character data generating apparatus according to claim 2, wherein the component information includes: information of component number for each of the components making up the character; information of coordinates of a line representing the shape of the component corresponding to the component number; and information of coordinates of an outer-frame of the component.

10. A character data generating apparatus according to claim 2, wherein the component-combination information includes information of a component number and an arrangement of each of the components making up the character; and information of the order of priority of the components that is associated with the readability of each of the components.

11. A character data generating apparatus according to claim 10, wherein the component-combination information further includes information of coordinate values of a reference position when the components making up the character are arranged.

12. A character data generating apparatus according to claim 1, wherein the minimum shape information includes: information of a component number for each of the components making up the character; information of a number of dots that is required in order to read a component corresponding to the component number; or information of an interval between coordinates which is required in order to read the component.

13. An electronic information device for performing at least one of a display process, a printing process and a communication process on character data that is generated using a character data generating apparatus according to claim 1.

14. A character data generating program for causing a computer to execute a component-shape setting step,
wherein
a character is made up of a plurality of components, the character is reduced, using minimum shape information in which a minimum shape for each of the plurality of components is defined or information for deriving the minimum shape is stored, such that the character is accommodated within a specified character frame, and
when a component of the character to be reduced is smaller than the minimum shape of the component, the component-shape setting step sets the minimum shape of the component as a shape of the component of the character.

15. A character data generating program according to claim 14 for causing the computer to execute a step of overlapping the components in a predetermined order of priority to generate character data when the components are overlapped with each other in the character frame after the component-shape setting step.

16. A computer-readable recording medium having a character data generating program according to claim 14 recorded thereon.

FIG.1

Input device — 30

Control section — 20

CPU — 21

Main memory — 22

Display device — 10

1

Auxiliary storage apparatus — 40

Character data generating program — 41

Data — 42

# FIG.2

Component DB — 421

Component-combination DB — 422

Minimum-shape DB — 423

42

Character synthesizing section — 201

Ratio adjusting section — 202

Component overlapping section — 203

Character data generating section — 204

EP 1 916 650 A1

FIG.3

(a)

14

(200,255)

(73,200) (75,200)

(116,84)

(31,84)

(7,27) (141,27)

(0,0)

Component number 8

(b)

15

(74,54) (55,255)

(60,48) (88,48)

(54,34) (97,34)

(60,20) (88,20)

(74,14)

(0,0)

Component number 33

(Accent mark : ring)

(c)

16

(66,55) (55,255)

(71,44) (85,33)

(0,0)

Component number 35

(Accent mark : grave)

FIG.4

| Code | Component 1 | Component 2 | Arrangement 2 | Component 3 | Arrangement 3 | Positional adjustment |
|------|-------------|-------------|---------------|-------------|---------------|-----------------------|
| 197 | 008 | 033 | Above | | | 74 |
| 192 | 008 | 035 | Above | | | 74 |

EP 1 916 650 A1

FIG.5

(a)

(5 dots in the horizontal direction, 7 dots in the vertical direction)

Component number 008

(b)

(3 dots in the horizontal direction, 3 dots in the vertical direction)

Component number 033

(c)

(3 dots in the horizontal direction, 2 dots in the vertical direction)

Component number 035

EP 1 916 650 A1

FIG.6

(a)

(b)

(c)

Component number 008

Component number 033

Component number 035

FIG.7

```
                    ┌─────────┐
                    │  Start  │
                    └────┬────┘
                         │
         ┌───────────────▼───────────────┐      S1
         │ Inputting a character size and a │
         │         character code         │
         └───────────────┬───────────────┘
                         │
              ┌──────────▼──────────┐      S2
              │    Reading data     │
              └──────────┬──────────┘
                         │
                ┌────────▼────────┐      S3
                │  Synthesizing   │
                └────────┬────────┘
                         │
              ┌──────────▼──────────┐      S4
              │ Adjusting the ratio │
              └──────────┬──────────┘
                         │
                      S5 │                              S6
                  ◇──────▼──────◇    NO    ┌──────────────────┐
                 ╱ No overlapping? ╲──────▶│    Generating    │
                  ◇─────────────◇          │ bitmap with the  │
                         │                 │   overlapping    │
                      YES│                 │     process      │
              ┌──────────▼──────────┐      └────────┬─────────┘
              │     Generating      │  S7           │
              │       bitmap        │               │
              └──────────┬──────────┘               │
                         │◀─────────────────────────┘
                    ┌────▼────┐
                    │   End   │
                    └─────────┘
```

FIG.8

# FIG.9

Scaling

Synthesize according to the arrangement position

Offset value

Offset value

111
112
113
114
115
116
117
118

EP 1 916 650 A1

FIG.10

```
              ┌──────────────┐
              │    Start     │
              └──────────────┘
                     │
                     ▼
         ┌─────────────────────────────┐
         │  Reading a first component  │ ~ S11
         └─────────────────────────────┘
                     │
                     ▼
       ┌──────────────────────────────────┐
       │  Obtaining a scaling ratio for    │ ~ S12
       │           the component           │
       └──────────────────────────────────┘
                     │
                     ▼
         ┌─────────────────────────────┐
         │    Scaling the component    │ ~ S13
         └─────────────────────────────┘
                     │
                     ▼
         ┌─────────────────────────────┐
         │  Reading another component  │ ~ S14
         └─────────────────────────────┘
                     │
                     ▼
         ┌─────────────────────────────┐
         │    Scaling the component    │ ~ S15
         └─────────────────────────────┘
                     │
                     ▼
             ┌──────────────────┐
             │   Synthesizing   │ ~ S16
             └──────────────────┘
                     │
                     ▼
         ┌─────────────────────────────┐
         │  Adjusting the central axis │ ~ S17
         └─────────────────────────────┘
                     │
                     ▼
   YES        ◇ Is there another ◇ ~ S18
              ◇   component?     ◇
                     │ NO
                     ▼
              ┌──────────────┐
              │     End      │
              └──────────────┘
```

# FIG.11

(a)

Center line

Capital letter
Accent mark
boundary

$y1$

(255,255)

(0,0)    $x1$

Original data

(b)

$x1 * 3/(255-y1)$

$3/(255-y1)$ }3

$(11-3)/y1$ }$11-3$

$y1*3/(255-y1)$

$y1*(11-3)/y1$

$x1 * (11-3)/y1$

Reduction of the accent mark and
the alphabet with different ratios

(c)

Movement amount for adjusting
the central position
$=(255 * 3/(255-y1)- 255 * (11-3)/y1)$
$* 1/2$ (half of the difference of the character
frames in width after the reduction)

Center line

(11,11)

Capital letter
Accent mark
boundary

(0,0)

Positional adjustment in the left
and right direction

EP 1 916 650 A1

# FIG.12

(a)

Center line

(255,255)

Capital letter
Accent mark $y1$
boundary

(0,0)    $x1$

Original data

(b)

$x1 * 3/(255-y1)$

$3/(255-y1)$

}  3

$y1*3/(255-y1)$
$y1*(11-3)/y1$

$(11-3)/y1$

}  11-3

$x1 * (11-3)/y1$

Reduction of the accent
mark and alphabet with
different ratios

(c)

Center line

(11,11)

Capital letter

Accent mark

boundary

(0,0)

Positional adjustment in the
left and right direction

EP 1 916 650 A1

FIG.13

```
                    ┌─────────┐
                    │  Start  │
                    └────┬────┘
                         │                           S21
         ┌──────────────▼──────────────────────────┐
         │ Setting up a list of unchecked components│
         └──────────────┬──────────────────────────┘
         │              │                           S22
         │      ┌────────▼─────────────┐
         │      │ Retrieving a component│
         │      └────────┬─────────────┘
         │               │                          S23
         │   ┌───────────▼────────────────────┐
         │   │ Obtaining the size of the component│
         │   └───────────┬────────────────────┘
         │               │                          S24
      NO │         ◇─────▼──────◇
         │        ╱ Less than the ╲
         │◄──────◇  minimum shape?  ◇
         │        ╲               ╱
         │         ◇──────┬──────◇
         │               │ YES                       S25
         │      ┌────────▼─────────┐
         │      │ Changing the ratio│
         │      └────────┬─────────┘
         │               │                           S26
         │   ┌───────────▼────────────┐
         │   │  Changing the ratio for │
         │   │    another component    │
         │   └───────────┬────────────┘
         │               │                           S27
         │         ◇─────▼──────◇        S28
         │        ╱ Any protrudent╲  ┌──────────────────┐
         │       ◇   component?     ◇─│ Putting up the flag│
         │        ╲               ╱YES│ for the overlapping│
         │         ◇──────┬──────◇    │      process       │
         │          NO    │◄──────────└──────────────────┘
         │               │                           S29
      YES│         ◇─────▼──────◇
         │        ╱ Is there any   ╲
         └───────◇ unchecked        ◇
                  ╲ component?      ╱
                   ◇──────┬──────◇
                         │ NO
                    ┌────▼────┐
                    │   End   │
                    └─────────┘
```

EP 1 916 650 A1

FIG.14

(a)

121

(b)

122

EP 1 916 650 A1

FIG.15

```
                    ┌──────────┐
                    │  Start   │
                    └──────────┘
                         │
                         ▼
  ┌──────────────────────────────────────────────┐      S31
  │ Obtaining a component having the lowest priority │
  └──────────────────────────────────────────────┘
                         │
                         ▼
         ┌──────────────────────────┐     S32
         │  Drawing the component    │
         └──────────────────────────┘
                         │
   ┌─────────────────────▼──────────────────────────────┐   S33
   │ Obtaining a component having the second lowest priority │
   └────────────────────────────────────────────────────┘
                         │
                         ▼
         ┌──────────────────────────────────┐   S34
         │ Providing the component with a border │
         │  portion and drawing the component   │
         └──────────────────────────────────┘
                         │
                         ▼
   YES        ◇  Is there any            S35
              other component which has
              not been drawn yet?
                         │
                         │ NO
                         ▼
                    ┌──────────┐
                    │   End    │
                    └──────────┘
```

FIG.16

123    +    124    Border portion    =    125

FIG.17

(a)

(b)

EP 1 916 650 A1

FIG.18

```
            ┌──────────┐
            │   Start  │
            └──────────┘
                 │
                 │                    S41
                 ▼
      ┌──────────────────────────┐
      │  Drawing a straight line │
      └──────────────────────────┘
                 │                    S42
                 ▼
      ┌──────────────────────────┐
      │  Generating bitmap data  │
      └──────────────────────────┘
                 │                    S43
                 ▼
            ◇─────────◇
   NO      Completed?
            ◇─────────◇
                 │ YES
                 ▼
            ┌──────────┐
            │    End   │
            └──────────┘
```

FIG.19

(a)

(b)

(c)

Normal
scaling

Sub-pixels are used
for minimum shape

Straight line

Inclined line using sub-pixels

EP 1 916 650 A1

FIG.20

| Types of minimum shapes | Minimum shape |
|---|---|
| Sub-pixel | (3,2) |

EP 1 916 650 A1

FIG.21

(a)

Outline data of "雪"

Conversion to bitmap
data of a smaller size

(b)

11x11 dots

雪

(c)

9x9 dots

雪

(d)

7x7 dots

雪

FIG.22

Border portion

Border portion

Border portion

# FIG.23

(a)

Accent mark：ring

Stroke data

Conversion to bitmap
（Rasterization）

(b)

Bitmap data

(c)

Accent mark：tilde

Difficult to
recognize

EP 1 916 650 A1

# FIG.24

(a)

Outline data of "雪"

Simple conversion to bitmap data

Conversion to bitmap data by applying a conventional technique (improved method)

(b)

13x13 dots

(c)

Component "ヨ" is ruined, resulting in an indistinguishable state between Kanji character "雪" and Kanji character "雷".

"Drops" in "雨" having a lower priority is ruined; yet, component "ヨ" having a higher priority is not ruined

# FIG.25

(a)

Outline data of "雪"

Conversion to bitmap data
of a smaller size

⟹

(b)

11x11 dots

雪

(c)

9x9 dots

雪

(d)

7x7 dots

雪

EP 1 916 650 A1

## FIG.26

| Types of components | Details of the component | Shapes of the component | Attributes of the component |
|---|---|---|---|
| Component：雨 | Component number 01 | | Applied size：9dot<br><br>Border portion：Around |
| | Component number 11 | | Applied size：7dot<br><br>Border portion： No |
| | Component number 12 (drops) | | Applied size：7dot<br>Border portion：<br>left and right direction<br>Dependent component：<br>Number 11 |
| ⋮ | ⋮ | ⋮ | ⋮ |

EP 1 916 650 A1

**EP 1 916 650 A1**

# INTERNATIONAL SEARCH REPORT

| | International application No. |
|---|---|
| | PCT/JP2006/315180 |

**A. CLASSIFICATION OF SUBJECT MATTER**
*G09G5/26*(2006.01)i, *G09G5/24*(2006.01)i

According to International Patent Classification (IPC) or to both national classification and IPC

**B. FIELDS SEARCHED**

Minimum documentation searched (classification system followed by classification symbols)
G09G5/26, G09G5/24

Documentation searched other than minimum documentation to the extent that such documents are included in the fields searched
Jitsuyo Shinan Koho         1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 11-288262 A  (Omron Corp.),<br>19 October, 1999 (19.10.99),<br>Par. Nos. [0027] to [0038]; Figs. 1 to 6<br>(Family: none) | 1-3,5-16 |
| Y | JP 6-318063 A  (Oki Electric Industry Co., Ltd.),<br>15 November, 1994 (15.11.94),<br>Par. Nos. [0012] to [0023]; Figs. 1 to 5<br>(Family: none) | 1-3,5-16 |
| Y | JP 3-282589 A  (Toshiba Corp.),<br>12 December, 1991 (12.12.91),<br>Page 3, upper left column, line 1 to upper right column, line 6; Fig. 4<br>(Family: none) | 3,5,15 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 October, 2006 (16.10.06) | 24 October, 2006 (24.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/315180 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 3-201788 A  (Philips Kabushiki Kaisha),<br>03 September, 1991 (03.09.91),<br>Claims; Fig. 2<br>& US 5334996 A          & EP 0435391 B1<br>& HK 194496 A | 7,8 |
| A | JP 2001-344232 A  (Canon Inc.),<br>14 December, 2001 (14.12.01),<br>Claim 2; Par. Nos. [0097] to [0102]; Fig. 11<br>(Family: none) | 1-16 |
| A | JP 8-329062 A  (Casio Computer Co., Ltd.),<br>13 December, 1996 (13.12.96),<br>Par. Nos. [0015] to [0019]; Fig. 2<br>(Family: none) | 1-16 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9190172 A

- JP 6318063 A